# EUROPEAN PATENT APPLICATION

(11) **EP 4 848 622 A1**
(43) Date of publication of application: **02.12.2026**
(21) Application number: 25751303.6
(22) Date of filing: 23.01.2025
(51) Int. Cl.: H04B 17/391

(54) **COMMUNICATION METHOD AND COMMUNICATION APPARATUS**

(30) Priority: 08.02.2024 CN 202410177336
(71) Applicant: HUAWEI TECHNOLOGIES CO., LTD., Shenzhen, Guangdong 518129 (CN)
(72) Inventor: TIAN, Yang, Shenzhen, Guangdong 518129 (CN); LI, Yuan, Shenzhen, Guangdong 518129 (CN); CHAI, Xiaomeng, Shenzhen, Guangdong 518129 (CN); SUN, Yan, Shenzhen, Guangdong 518129 (CN)
(74) Representative: Gill Jennings & Every LLP
(86) International application number: PCT/CN2025/074323
(87) International publication number: WO 2025/167701

(57) **Abstract**

A communication method and a communication apparatus are provided, and relate to the field of communication technologies. In the communication method, both a first apparatus and a second apparatus may determine, based on a state of a first channel report, whether to update a value of state information of an AI model deployed on each side. For example, when the first apparatus does not send the first channel report to the second apparatus, the first apparatus determines, based on the state of the first channel report (for example, the state of the first channel report is that the first channel report is an untransmitted state), not to update the value of the state information of the AI model deployed on the first apparatus side, and the second apparatus does not update the value of the state information of the AI model deployed on the second apparatus side. In this way, the first apparatus and the second apparatus have a consistent pace in updating the value of the state information of the AI model, thereby improving feedback performance of the channel report, and further improving channel information recovery performance and robustness of the recovery performance.

## Description

This application claims priority to Chinese Patent Application No. 202410177336.9, filed with the China National Intellectual Property Administration on February 8, 2024 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

In a communication system, a network device determines, based on downlink channel state information (channel state information, CSI), downlink channel-related configuration information, for example, a resource, a modulation and coding scheme (modulation and coding scheme, MCS), and precoding, used to schedule a downlink data channel of a terminal device. The terminal device calculates the downlink CSI by measuring a downlink reference signal, and generates a CSI report to feed back to the network device.

After artificial intelligence (artificial intelligence, AI) is introduced into wireless communication, an AI-based CSI feedback manner emerges. An AI model has a stronger feature extraction capability, and can more effectively compress channel information, reduce an information loss in a compression process, and ensure accuracy of recovered channel information.

CSI feedback based on a time domain correlation is used as an example. An AI model on a terminal device side outputs CSI feedback information based on a current channel measurement result and state information of the AI model, and an AI model on a network device side recovers channel information based on a most recently received CSI feedback information and state information of the AI model. The state information of the AI model on the terminal device side is determined based on a historical channel measurement result. The state information of the AI model on the network device side is determined based on CSI feedback information received at a historical moment. Because receiving of the CSI feedback information depends on a transmission condition of a channel, a packet loss of the CSI feedback information causes deterioration of performance in recovering channel information. Therefore, there is an urgent need for a solution to improve robustness of channel information recovery performance.

### SUMMARY

This application provides a communication method and a communication apparatus, to improve feedback performance of a channel report, and further improve channel information recovery performance and robustness of the recovery performance.

According to a first aspect, a communication method is provided, including: obtaining a state of a first channel report; and determining a value of state information of a first artificial intelligence AI model, where the value of the state information of the first AI model is related to the state of the first channel report.

The method may be performed by a first apparatus. The first apparatus may be a device on a first AI model side, or may be a chip or a circuit of the device on the first AI model side. The device on the first AI model side may be replaced with a device on a terminal device side or a device on a network device side. The terminal device side may include at least one of a terminal device or an AI entity on the terminal device side. The AI entity on the terminal device side may be the terminal device itself, or may be an AI entity that serves the terminal device, for example, a server, such as an over-the-top (over the top, OTT) server or a cloud server. The network device side may include at least one of a network device or an AI entity on the network device side. The AI entity on the network device side may be the network device itself, or may be an AI entity serving the network device, for example, a radio access network (radio access network, RAN) intelligent controller (RAN intelligent controller, RIC), an operation, administration and maintenance (operation administration and maintenance, OAM), or a server, such as an OTT server or a cloud server.

The first AI model is an auto-encoder model. The auto-encoder model may further include a second AI model.

The first AI model, for example, an AI model on the terminal device side, may be used to generate a channel report.

The first channel report may be replaced with a first CSI report, or first CSI feedback information, or first CSI compressed information.

In the foregoing solution, the first apparatus may determine, based on the state of the first channel report, whether to update the value of the state information of the first AI model. For example, when the state of the first channel report indicates that the first channel report is in a transmission uncompleted state, the first apparatus determines not to update the value of the state information of the first AI model, that is, the first apparatus keeps the value of the state information of the first AI model unchanged. When a second apparatus, that is, a device on a second AI model side or a chip or circuit of the device on the second AI model side, does not receive the first channel report, the second apparatus cannot update a value of state information of a second AI model based on the first channel report. However, according to the foregoing solution, the first apparatus does not update the value of the state information of the first AI model. In this way, the first apparatus and the second apparatus have a consistent pace in updating the value of the state information of the AI model, thereby improving feedback performance of the channel report, and further improving channel information recovery performance and robustness of the recovery performance.

The device on the second AI model side may be replaced with a device on the terminal device side or a device on the network device side. For descriptions of the device on the terminal device side and the device on the network device side, refer to the foregoing descriptions of the device on the first AI model side. Details are not described again.

According to the first aspect, the first channel report is determined based on a first value of the state information of the first AI model.

In this way, channel information can be compressed based on a historical channel measurement result.

In the first aspect, that the value of the state information of the first AI model is related to the state of the first channel report includes:

The state of the first channel report is a discarded state, and the value of the state information of the first AI model remains unchanged;
the state of the first channel report is a partial content sent state, and the value of the state information of the first AI model remains unchanged; or
the state of the first channel report is an all content sent state, and the value of the state information of the first AI model is updated.

The first apparatus may determine a corresponding behavior based on the state of the first channel report. For example, the first apparatus determines, based on the state of the first channel report, whether to update the value of the state information of the first AI model or maintain the value of the state information of the first AI model. This enables the first apparatus and the second apparatus to have a consistent pace in updating the value of the state information of the AI model, thereby improving feedback performance of the channel report, and further improving channel information recovery performance and robustness of the recovery performance.

In the first aspect, that the state of the first channel report is the discarded state is determined based on at least one of the following:
a resource used to transmit the first channel report overlaps, in time domain, with a resource used to transmit a hybrid automatic repeat request report;
a resource used to transmit the first channel report overlaps, in time domain, with a resource used to transmit a scheduling request report;
a priority of a first channel is lower than a priority of a second channel, the second channel overlaps with the first channel in time domain, the first channel is used to carry the first channel report, and the second channel is used to carry uplink information; or
a channel used to carry the first channel report conflicts with a downlink symbol or a flexible symbol configured or indicated by a network device.

The first apparatus may determine, based on one or more of the foregoing, whether the first channel report is in the discarded state. When determining that the first channel report is in the discarded state, the first apparatus does not update the value of the state information of the first AI model. Because the first channel report is not received, the second apparatus cannot update the value of the state information of the second AI model based on the first channel report. In this way, the first apparatus and the second apparatus may have a consistent pace in updating the value of the state information of the AI model, thereby improving feedback performance of the channel report, and further improving channel information recovery performance and robustness of the recovery performance.

In the first aspect, that the value of the state information of the first AI model is related to the state of the first channel report includes: The state of the first channel report is a partial content sent state, and the value of the state information of the first AI model is related to an offset between a sending time unit of a second channel report and a generation time unit of a third channel report; the second channel report is determined based on a second value of the state information of the first AI model, and the first value is determined by updating the second value based on the second channel report; and the third channel report is a 1^{st} channel report sent after the first channel report.

When the first apparatus sends the first channel report including partial content to the second apparatus, the first apparatus may determine, based on the offset between the sending time unit of the second channel report and the generation time unit of the third channel report, whether to update the value of the state information of the first AI model. When it is ensured that the first apparatus and the second apparatus have a consistent pace for the value of the state information of the AI model, the first apparatus uses real-time and valid channel information, thereby improving feedback performance of the channel report, and further improving channel information recovery performance and robustness of the recovery performance.

In the first aspect, that the value of the state information of the first AI model is related to the offset between the sending time unit of the second channel report and the generation time unit of the third channel report includes:

When the offset is greater than a threshold, the value of the state information of the first AI model is updated; or
when the offset is less than the threshold, the value of the state information of the first AI model remains unchanged.

In this way, the first apparatus may determine, based on a relationship between the offset and the threshold, whether to update the value of the state information of the first AI model.

In the first aspect, the threshold is indicated or configured by the network device, or the threshold is predefined.

That the threshold is predefined may include: The threshold is predefined in a protocol, the threshold is pre-stored, the threshold is pre-burnt, or the like.

In the first aspect, that the state of the first channel report is the partial content sent state is determined based on at least one of the following:
a processing resource that may be used for calculation on a terminal device side is insufficient to generate an expected first channel report;
a time unit in which the first channel report is configured or indicated to be reported by the network device does not meet a time requirement for calculating the expected first channel report;
a time unit that is configured or indicated by the network device and that corresponds to an uplink data channel carrying the first channel report does not meet the time requirement for calculating the expected first channel report; or
a transmission resource that is configured or indicated by the network device to carry the first channel report is insufficient to carry the expected first channel report.

The first apparatus may determine, based on one or more of the foregoing, whether the first channel report is in the partial content sent state. When determining that the first channel report is in the partial content sent state, the first apparatus may determine whether to update the value of the state information of the first AI model. Correspondingly, this can avoid that the first apparatus updates the value of the state information of the first AI model before determining whether the first channel report is in the all content sent state, so that the first apparatus and the second apparatus can support a consistent pace in updating the value of the state information of the AI model, thereby improving feedback performance of the channel report, and further improving channel information recovery performance and robustness of the recovery performance.

According to the first aspect, the first value is determined based on a channel measurement result of a historical reference signal; a sending time unit of the historical reference signal is earlier than a sending time unit of a first reference signal; and the first channel report corresponds to the first reference signal.

In this way, channel information can be compressed by using a correlation of channels in time domain.

According to a second aspect, a communication method is provided, including: obtaining a state of a first channel report; and determining a value of state information of a second artificial intelligence AI model, where the value of the state information of the second AI model is related to the state of the first channel report.

The method may be performed by a second apparatus. The second apparatus may be a device on a second AI model side, or a chip or a circuit used for a device on the second AI model side. The device on the second AI model side may be replaced with a device on a terminal device side or a device on a network device side. For descriptions of the device on the terminal device side or the device on the network device side, refer to the foregoing descriptions of the device on the first AI model side. Details are not described again.

The second AI model is an auto-encoder model. The auto-encoder model may further include the first AI model.

The second AI model is an AI model that matches the first AI model, may be an AI model on a network device side, and may be used to recover channel information corresponding to a channel report.

In the foregoing solution, the second apparatus determines the value of the state information of the second AI model based on the state of the first channel report. This enables the first apparatus and the second apparatus to have a consistent pace in updating the value of the state information of the AI model, thereby improving feedback performance of the channel report, and further improving channel information recovery performance and robustness of the recovery performance.

In the second aspect, that the value of the state information of the second AI model is related to the state of the first channel report includes:

The state of the first channel report is a partial content sent state, and the value of the state information of the second AI model remains unchanged; or
the state of the first channel report is an all content sent state, and the value of the state information of the second AI model is updated.

The second apparatus may determine a corresponding behavior based on the state of the first channel report. For example, the second apparatus determines, based on the state of the first channel report, whether to update the value of the state information of the second AI model or maintain the value of the state information of the second AI model. In this way, the first apparatus and the second apparatus have a consistent pace in updating the value of the state information of the AI model, thereby improving feedback performance of the channel report, and further improving channel information recovery performance and robustness of the recovery performance.

In the second aspect, that the value of the state information of the second AI model is related to the state of the first channel report includes:

The state of the first channel report is a partial content sent state, and the value of the state information of the second AI model is related to an offset between a receiving time unit of a second channel report and a receiving time unit of a third channel report; a first value of the state information of the second AI model is determined by updating a second value of the state information of the second AI model based on the second channel report, and an update of the first value is related to the first channel report; and the third channel report is a 1^{st} channel report received after the first channel report.

When the first apparatus sends the first channel report including partial content to the second apparatus, the second apparatus may determine, based on the offset between the receiving time unit of the second channel report and the receiving time unit of the third channel report, whether to update the value of the state information of the second AI model. When it is ensured that the first apparatus and the second apparatus have a consistent pace for the value of the state information of the AI model, the second apparatus may use real-time and valid channel information, thereby improving feedback performance of the channel report, and further improving channel information recovery performance and robustness of the recovery performance.

In the second aspect, that the value of the state information of the second AI model is related to the offset between the receiving time unit of the second channel report and the receiving time unit of the third channel report includes:

When the offset is greater than a threshold, the value of the state information of the second AI model is updated; or
when the offset is less than the threshold, the value of the state information of the second AI model remains unchanged.

In this way, the second apparatus may determine, based on a relationship between the offset and the threshold, whether to update the value of the state information of the second AI model.

In the second aspect, the threshold is indicated or configured by the network device, or the threshold is predefined.

That the threshold is predefined may include: The threshold is predefined in a protocol, the threshold is pre-stored, the threshold is pre-burnt, or the like.

In the second aspect, that the state of the first channel report is the partial content sent state is determined based on at least one of the following:
a processing resource that may be used for calculation on a terminal device side is insufficient to generate an expected first channel report;
a time unit in which the first channel report is configured or indicated to be reported by the network device does not meet a time requirement for calculating the expected first channel report;
a time unit that is configured or indicated by the network device and that corresponds to an uplink data channel carrying the first channel report does not meet the time requirement for calculating the expected first channel report; or
a transmission resource that is configured or indicated by the network device to carry the first channel report is insufficient to carry the expected first channel report.

According to a third aspect, a communication apparatus is provided. The communication apparatus may be a first apparatus, or may be a device, a module, or the like configured to perform a function of the first apparatus.

In a possible implementation, the communication apparatus may include modules or units in one-to-one correspondence with the methods/operations/steps/actions described in the first aspect. The modules or units may be implemented by a hardware circuit, software, or a combination of a hardware circuit and software.

The first apparatus may be a terminal device or an AI entity on a terminal device side, or may be a network device or an AI entity on a network device side. This is not limited herein.

According to a fourth aspect, a communication apparatus is provided. The communication apparatus may be a second apparatus, or may be a device, a module, or the like configured to perform a function of the second apparatus.

In a possible implementation, the communication apparatus may include modules or units in one-to-one correspondence with the methods/operations/steps/actions described in the second aspect. The modules or units may be implemented by a hardware circuit, software, or a combination of a hardware circuit and software.

The second apparatus may be a network device or an AI entity on a network device side, or may be a terminal device or an AI entity on a terminal device side.

According to a fifth aspect, a communication apparatus is provided, and includes a processor. The processor is configured to cause, by executing a computer program or instructions or via a logic circuit, the communication apparatus to perform the method according to any one of the first aspect and the possible implementations of the first aspect, or the communication apparatus to perform the method according to any one of the second aspect and the possible implementations of the second aspect.

In a possible implementation, the communication apparatus further includes a memory. The memory is configured to store the computer program or the instructions.

In a possible implementation, the communication apparatus further includes a communication interface, configured to input a signal and/or output a signal.

According to a sixth aspect, a communication apparatus is provided, and includes a logic circuit and an input/output interface. The input/output interface is configured to input and/or output a signal, and the logic circuit is configured to perform the method according to any one of the first aspect and the possible implementations of the first aspect, or the logic circuit is configured to perform the method according to any one of the second aspect and the possible implementations of the second aspect.

According to a seventh aspect, a computer-readable storage medium is provided. The computer-readable storage medium stores a computer program or instructions. When the computer program or the instructions are run on a computer, the method according to any one of the first aspect and the possible implementations of the first aspect is performed, or the method according to any one of the second aspect and the possible implementations of the second aspect is performed.

According to an eighth aspect, a computer program product is provided, and includes instructions. When the instructions are run on a computer, the method according to any one of the first aspect and the possible implementations of the first aspect is performed, or the method according to any one of the second aspect and the possible implementations of the second aspect is performed.

According to a ninth aspect, a chip or a chip system is provided, including one or more processors. The processor is configured to execute a computer program or instructions in a memory, so that the chip or the chip system implements the method according to any one of the first aspect or the possible implementations of the first aspect; or the chip or the chip system implements the method according to any one of the second aspect or the possible implementations of the second aspect.

For descriptions of beneficial effect of any one of the third aspect to the ninth aspect, refer to descriptions of beneficial effect of the first aspect and the second aspect. Details are not described again.

### BRIEF DESCRIPTION OF DRAWINGS

FIG. 1 is a diagram of an application framework to which an embodiment of this application is applicable;
FIG. 2 is a diagram of another application framework to which an embodiment of this application is applicable;
FIG. 3 is a diagram of a communication system to which an embodiment of this application is applicable;
FIG. 4 is a diagram of another communication system to which an embodiment of this application is applicable;
FIG. 5 is a diagram of a relationship between an encoder and a decoder;
FIG. 6 is a diagram of an application scenario to which an embodiment of this application is applicable;
FIG. 7A to FIG. 7C are diagrams illustrating that a first apparatus and a second apparatus have a consistent pace in updating a value of state information of an AI model according to an embodiment of this application;
FIG. 8 is a schematic interaction flowchart of a communication method according to an embodiment of this application;
FIG. 9 is a schematic interaction flowchart of another communication method according to an embodiment of this application;
FIG. 10 is a schematic interaction flowchart of still another communication method according to an embodiment of this application;
FIG. 11 is a block diagram of a communication apparatus according to an embodiment of this application; and
FIG. 12 is another block diagram of a communication apparatus according to an embodiment of this application.

### DESCRIPTION OF EMBODIMENTS

The following describes technical solutions of this application with reference to accompanying drawings.

For ease of understanding embodiments of this application, the following descriptions are provided first.
1. In this application, unless otherwise specified, "a/the plurality of" means two or more.
2. In embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.
3. Various numbers in this application are merely used for differentiation for ease of description, but are not used to limit the protection scope of this application. Sequence numbers in this application do not mean an execution sequence, and the execution sequence of processes should be determined based on functions and internal logic of the processes. For example, in this specification, the claims, and the accompanying drawings of this application, the terms "first", "second", "third", "fourth", and various other term numerals (if existent) are intended to distinguish between similar objects, but do not necessarily indicate a specific order or sequence. Data used in such a way is interchangeable in appropriate circumstances, so that embodiments described herein can be implemented in other orders than the order illustrated or described herein.

In addition, any embodiment or design solution described with "example" or "for example" in this application should not be explained as being more preferred or having more advantages than another embodiment or design solution. Exactly, use of the terms such as "example" or "for example" is intended to present a related concept in a specific manner for ease of understanding.

4. The terms "include", "have", and any other variant thereof are intended to cover a non-exclusive inclusion. For example, a process, a method, a system, a product, or a device that includes a list of operations or units is not necessarily limited to those expressly listed operations or units, but may include other operations or units not expressly listed or inherent to the process, the method, the product, or the device.

5. In this application, "indicate" may be understood as "enable", and "enable" may include "directly enable" and "indirectly enable". When a piece of information is described to enable A, the information may directly enable A or indirectly enable A, but it does not mean that the information definitely carries A.

Information enabled by the information is referred to as to-be-enabled information. In a specific implementation process, the to-be-enabled information may be enabled in many manners, for example, but not limited to, the to-be-enabled information may be directly enabled, such as the to-be-enabled information or an index of the to-be-enabled information. Alternatively, the to-be-enabled information may be indirectly enabled by enabling other information, where there is an association relationship between the other information and the to-be-enabled information. Alternatively, only a part of the to-be-enabled information may be enabled, and other parts of the to-be-enabled information are known or agreed in advance. For example, specific information may be enabled through a pre-agreed (for example, specified in a protocol) sequence of all information, so as to reduce enabling overheads to some extent. In addition, a common part of all information may be identified and enabled in a unified manner, so as to reduce enabling overheads caused by enabling the same information separately.

6. In this application, the term "pre-configuration" may include predefinition, for example, definition in a protocol. The "predefinition" may be implemented by pre-storing, in a device (including, for example, network elements), corresponding code, a corresponding table, or other related information that may be used for indication. A specific implementation thereof is not limited in this application.

7. "Store" or "save" in this application may mean "be stored in one or more memories". The one or more memories may be separately disposed, or may be integrated into an encoder, a decoder, a processor, or a communication apparatus. Alternatively, the one or more memories may be partially disposed separately, and partially integrated into a decoder, a processor, or a communication apparatus. The memory may be a storage medium in any form. This is not limited.

8. A "protocol" in this application may be a standard protocol in the communication field, for example, may include a 4th generation (4th generation, 4G) network protocol, a 5th generation (5th generation, 5G) network protocol, a new radio (new radio, NR) protocol, a 5.5G network protocol, a 6th generation (6th generation, 6G) network protocol, and a related protocol applied to a future communication system. This is not limited in this application.

9. Arrows or blocks shown by dashed lines in diagrams of the accompanying drawings in this specification of this application indicate optional steps or optional modules.

10. In this application, unless otherwise specified, "/" indicates an "or" relationship between associated objects. For example, A/B may indicate A or B. In this application, "and/or" merely shows an association relationship for describing associated objects and indicates that three relationships may exist. For example, A and/or B may indicate the following three cases: Only A exists, both A and B exist, and only B exists, where A and B may be singular or plural.

11. In this application, "indicating" includes directly indicating (also referred to as explicitly indicating) and implicitly indicating. Directly indicating information A means including the information A. Implicitly indicating information A means indicating the information A based on a correspondence between information A and information B and directly indicating the information B. The correspondence between information A and information B may be predefined, pre-stored, pre-burned, or preconfigured.

12. In this application, that information C is used for determining information D includes that the information D is determined based only on the information C, and also includes that the information D is determined based on the information C and other information. In addition, that the information C is used to determine the information D may further include an indirect determining case. For example, the information D is determined based on information E, and the information E is determined based on the information C.

13. In this application, "an apparatus A sends the information A to an apparatus B" may be understood as that a destination end of the information A or an intermediate network element on a transmission path to the destination end is the apparatus B, and may include directly or indirectly sending the information to the apparatus B.

14. In this application, "the apparatus B receives the information A from the apparatus A" may be understood as that a source end of the information A or an intermediate network element on a transmission path to the source end is the apparatus A, and may include directly or indirectly receiving the information from the apparatus A. Necessary processing, for example, a format change, may be performed on the information when the information is sent between the source end and the destination end, but the destination end can understand valid information from the source end. Similar descriptions in this application may be understood similarly. Details are not described herein.

First, a communication system to which an embodiment of this application is applicable is described.

The technical solutions provided in this application may be applied to various communication systems, for example, a 5G or NR system, a long term evolution (long term evolution, LTE) system, an LTE frequency division duplex (frequency division duplex, FDD) system, an LTE time division duplex (time division duplex, TDD) system, a wireless local area network (wireless local area network, WLAN) system, a satellite communication system, a future communication system, such as a 6G mobile communication system, or a system integrating a plurality of systems. The technical solutions provided in this application may be further applied to device-to-device (device-to-device, D2D) communication, vehicle-to-everything (vehicle-to-everything, V2X) communication, machine-to-machine (machine-to-machine, M2M) communication, machine type communication (machine type communication, MTC), an Internet of Things (Internet of Things, IoT) communication system, or another communication system.

One apparatus in a communication system may send a signal to another apparatus or receive a signal from another apparatus. The signal may include information, signaling, data, or the like. The apparatus may alternatively be replaced with an entity, a network entity, a device, a communication device, a communication module, a node, a communication node, or the like. In this application, the apparatus is used as an example for description. For example, the communication system may include at least one terminal device and at least one network device. The network device may send a downlink signal to the terminal device, and/or the terminal device may send an uplink signal to the network device, and/or the terminal device may send a sidelink signal to another terminal device, and/or the network device may send a signal to another network device.

In embodiments of this application, the terminal device may also be referred to as user equipment (user equipment, UE), an access terminal, a subscriber unit, a subscriber station, a mobile station, a mobile console, a remote station, a remote terminal, a mobile device, a user terminal, a terminal, a wireless communication device, a user agent, or a user apparatus.

The terminal device may be a device that provides voice/data, for example, a handheld device or a vehicle-mounted device with a wireless connection function. Currently, some examples of the terminal are: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in a remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a cellular phone, a cordless phone, a session initiation protocol (session initiation protocol, SIP) phone, a wireless local loop (wireless local loop, WLL) station, a personal digital assistant (personal digital assistant, PDA), a handheld device having a wireless communication function, a compute device or another processing device connected to a wireless modem, a wearable device, a terminal device in a 5G network, a terminal device in a future evolved public land mobile communication network (public land mobile network, PLMN), or the like. This is not limited in embodiments of this application.

For example rather than limitation, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, and shoes. The wearable device is a portable device that can be directly worn on the body or integrated into clothes or an accessory of a user. The wearable device is not only a hardware device, but also implements a powerful function through software support, data exchange, and cloud interaction. In a broad sense, wearable intelligent devices include full-featured and large-sized devices that can implement complete or partial functions without depending on smartphones, such as smart watches or smart glasses, and devices that dedicated to only one type of application function and need to work with other devices such as smartphones, such as various smart bands or smart jewelry for monitoring physical signs.

In embodiments of this application, an apparatus configured to implement a function of the terminal device may be the terminal device, or may be an apparatus that can support the terminal device in implementing the function, such as a chip system, where the apparatus may be installed in the terminal device or used in matching with the terminal device. In embodiments of this application, the chip system may include a chip, or may include a chip and another discrete component. In embodiments of this application, only an example in which the apparatus configured to implement the function of the terminal device is a terminal device is used for description, and constitutes no limitation on the solutions in embodiments of this application.

A network device in embodiments of this application may be a device configured to communicate with the terminal device. The network device may also be referred to as an access network device or a radio access network device. For example, the network device may be a base station. In embodiments of this application, the network device may be a radio access network (radio access network, RAN) node (or device) that connects the terminal device to a wireless network.

The base station may cover the following names in a broad sense, or may be replaced with the following names, for example, a NodeB (NodeB), an evolved NodeB (evolved NodeB, eNB), a next generation NodeB (next generation NodeB, gNB), a relay station, an access point, a transmission point (transmitting and receiving point, TRP), a transmitting point (transmitting point, TP), a primary station, a secondary station, a multi-standard radio (motor slide retainer, MSR) node, a home base station, a network controller, an access node, a radio node, an access point (access point, AP), a transmission node, a transceiver node, a baseband unit (baseband unit, BBU), a remote radio unit (remote radio unit, RRU), an active antenna unit (active antenna unit, AAU), a remote radio head (remote radio head, RRH), a central unit (central unit, CU), a distributed unit (distributed unit, DU), a radio unit (radio unit, RU), a positioning node, and a RAN intelligent controller (RAN intelligent controller, RIC).

The base station may alternatively be a macro base station, a micro base station, a relay node, a donor node, an analogue, or a combination thereof. The base station may alternatively be a communication module, a modem, or a chip arranged in the foregoing device or apparatus. The base station may alternatively be a mobile switching center, a device that bears a base station function in D2D, V2X, and M2M communication, a network side device in a 6G network, a device that bears a base station function in a future communication system, or the like. The base station may support networks of a same access technology or different access technologies.

Optionally, the RAN node may alternatively be a server, a wearable device, a vehicle, a vehicle-mounted device, or the like. For example, an access network device in a vehicle-to-everything (vehicle-to-everything, V2X) technology may be a road side unit (road side unit, RSU). A specific technology and a specific device form that are used by the network device are not limited in embodiments of this application.

The base station may be fixed or mobile. For example, a helicopter or an uncrewed aerial vehicle may be configured as a mobile base station, and one or more cells may move based on a position of the mobile base station. In other examples, a helicopter or an uncrewed aerial vehicle may be configured as a device for communicating with another base station.

In some deployments, the network device may be a device including a CU or a DU, or a device including a CU and a DU, or a device including a control plane CU node (a central unit-control plane (central unit-control plane, CU-CP)), a user plane CU node (a central unit-user plane (central unit-user plane, CU-UP)), and a DU node. For example, the network device includes a gang-CU-CP, a gNB-CU-UP, and a gNB-DU.

In some deployments, a plurality of RAN nodes cooperate to assist a terminal in implementing radio access, and different RAN nodes respectively implement some functions of the base station. For example, the RAN node may be a CU, a DU, a CU-CP, a CU-UP, or an RU. The CU and the DU may be separately disposed, or may be included in a same network element, for example, a BBU. The RU may be included in a radio frequency device or a radio frequency unit, for example, included in an RRU, an AAU, or an RRH.

The RAN node may support one or more types of fronthaul interfaces, and different fronthaul interfaces respectively correspond to DUs and RUs having different functions.

If a fronthaul interface between the DU and the RU is a common public radio interface (common public radio interface, CPRI), the DU is configured to implement one or more baseband functions, and the RU is configured to implement one or more radio frequency functions.

If the fronthaul interface between the DU and the RU is another type of interface, in comparison with the CPRI, some downlink and/or uplink baseband functions are moved from the DU to the RU for implementation. For example, for downlink, one or more of precoding (precoding), digital beamforming (beamforming, BF), or inverse fast Fourier transform (inverse fast Fourier transform, IFFT)/cyclic prefix (cyclic prefix, CP) addition are moved from the DU to the RU for implementation; and for uplink, one or two of digital beamforming (beamforming, BF) or fast Fourier transform (fast Fourier transform, FFT)/cyclic prefix (cyclic prefix, CP) removal are moved from the DU to the RU for implementation.

In a possible implementation, the interface may be an enhanced common public radio interface (enhanced common public radio interface, eCPRI). In an eCPRI architecture, different split manners between the DU and the RU correspond to different categories (category, Cat) of eCPRIs, for example, eCPRI Cat A, B, C, D, E, and F.

eCPRI Cat A is used as an example. For downlink transmission, with layer mapping being a split point, the DU is configured to implement layer mapping and one or more functions before layer mapping (that is, one or more of encoding, rate matching, scrambling, modulation, and layer mapping), and other functions after layer mapping (for example, one or more of resource element (resource element, RE) mapping, digital beamforming (beamforming, BF), or inverse fast Fourier transform (inverse fast Fourier transform, IFFT)/cyclic prefix (cyclic prefix, CP) addition) are implemented in the RU. For uplink transmission, with RE demapping being a split point, the DU is configured to implement one or more functions before demapping (that is, one or more functions of decoding, rate de-matching, descrambling, demodulation, inverse discrete Fourier transform (inverse discrete Fourier transform, IDFT), channel equalization, and RE demapping), and other functions after demapping (for example, one or more of digital BF or fast Fourier transform (fast Fourier transform, FFT)/CP removal) are implemented in the RU. It may be understood that for function descriptions of DUs and RUs corresponding to various categories of eCPRIs, refer to the eCPRI protocol. Details are not described herein.

In a possible design, a processing unit for implementing a baseband function in the BBU is referred to as a baseband high (baseband high, BBH) unit, and a processing unit for implementing a baseband function in the RRU/AAU/RRH is referred to as a baseband low (baseband low, BBL) unit.

In different communication systems, the CU (or the CU-CP and the CU-UP), the DU, or the RU may alternatively have different names, but a person skilled in the art may understand meanings thereof. For example, in an open RAN (open RAN, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. Any one of the CU (or the CU-CP or the CU-UP), the DU, and the RU in this application may be implemented by using a software module, a hardware module, or a combination of a software module and a hardware module.

In embodiments of this application, an apparatus configured to implement a function of the network device may be a network device, or may be an apparatus that can support the network device in implementing the function, for example, a chip system, a hardware circuit, a software module, or a combination of a hardware circuit and a software module. The apparatus may be installed in the network device or used together with the network device. In embodiments of this application, only an example in which the apparatus configured to implement the function of the network device is a network device is used for description, and constitutes no limitation on the solutions in embodiments of this application.

The network device and/or the terminal device may be deployed on land, and include an indoor or outdoor device, a handheld device, or a vehicle-mounted device; may be deployed on water; or may be deployed on a plane, a balloon, or a satellite in the air. Scenarios in which the network device and the terminal device are located are not limited in embodiments of this application.

In addition, the terminal device and the network device may be hardware devices; may be software functions running on dedicated hardware, or software functions running on general-purpose hardware, for example, virtualized functions instantiated on a platform (for example, a cloud platform); or may be entities including a dedicated or general-purpose hardware device and a software function. Specific forms of the terminal device and the network device are not limited in this application.

In a wireless communication network (for example, a mobile communication network), services supported by the network are increasingly diversified, and therefore requirements that need to be satisfied are increasingly diversified. For example, the network needs to be capable of supporting an ultra-high rate, an ultra-low latency, and/or massive connections. This feature makes network planning, network configuration, and/or resource scheduling increasingly complex. Because the network has increasingly powerful functions, for example, supports an increasingly high spectrum and supports new technologies such as a higher-order multiple-input multiple-output (multiple-input multiple-output, MIMO), beamforming, and/or beam management, network energy saving becomes a hot research topic. These new requirements, scenarios, and features bring unprecedented challenges to network planning, operation and maintenance, and efficient operation. To address the challenges, AI technologies can be introduced to wireless communication networks to implement network intelligence.

To support an AI technology in a wireless network, an AI node (which may also be referred to as an AI entity) may be further introduced into the network.

Optionally, the AI entity may be deployed in one or more of the following positions in the communication system: an access network device, a terminal device, a core network device, or the like. Alternatively, the AI entity may be independently deployed, for example, deployed at a position other than any one of the foregoing devices, for example, a host or a cloud server in an OTT system. The AI entity may communicate with another device in the communication system. The another device may be, for example, one or more of the following: a network device, a terminal device, or a network element in a core network. Based on an object served by the AI entity, the AI entity may include an AI entity on a network device side, an AI entity on a terminal device side, or an AI entity on a core network side.

It may be understood that a quantity of AI entities is not limited in this application. For example, when there are a plurality of AI entities, the plurality of AI entities may be divided based on functions. For example, different AI entities are responsible for different functions.

It may be further understood that the AI entity may be a device independent of each other, may be integrated into a same device to implement different functions, may be a network element in a hardware device, may be a software function running on dedicated hardware, or may be a virtualized function instantiated on a platform (for example, a cloud platform). A specific form of the AI entity is not limited in this application.

The AI entity may be an AI network element or an AI module. The AI entity is configured to implement a corresponding AI function. AI modules deployed in different network elements may be the same or different. The AI model of the AI entity is configured based on different parameters, and the AI entity may implement different functions. The AI model in the AI entity may be configured based on one or more of the following parameters: a structure parameter (for example, at least one of the following: a quantity of layers of a neural network, a width of the neural network, a connection relationship between layers, a weight of a neuron, an activation function of the neuron, or a bias in the activation function), an input parameter (for example, a type of the input parameter and/or a dimension of the input parameter), or an output parameter (for example, a type of the output parameter and/or a dimension of the output parameter). The bias in the activation function may also be referred to as a bias of the neural network.

One AI entity may have one or more models. Learning processes, training processes, or inference processes of different models may be deployed in different entities or devices, or may be deployed on a same entity or device.

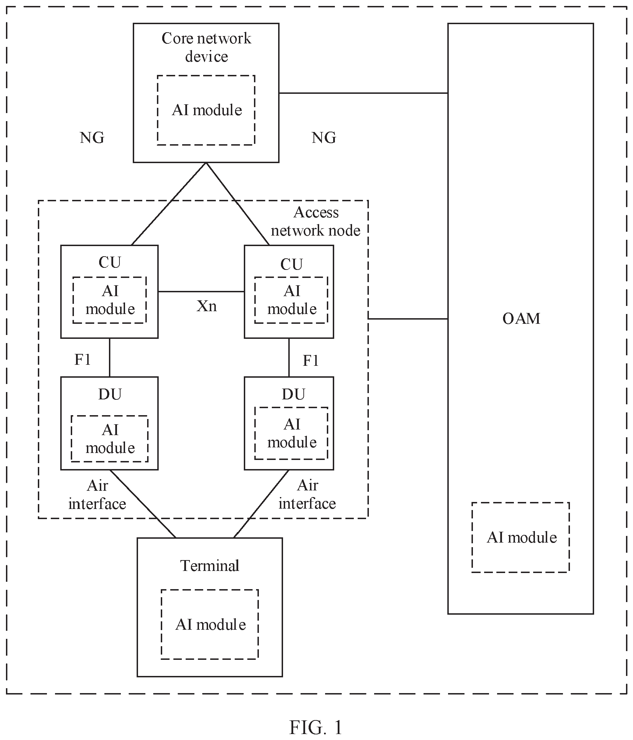

FIG. 1 is a diagram of an application framework to which an embodiment of this application is applicable. As shown in FIG. 1, apparatuses are connected through an interface (for example, NG or Xn) or an air interface. For example, one or more AI modules (for clarity, only one AI module is shown in FIG. 1) are disposed in one or more of the apparatus nodes, such as a core network device, an access network node (RAN node), a terminal, or an OAM. The access network node may be used as an independent RAN node, or may include a plurality of RAN nodes, for example, include a CU and a DU. One or more AI modules may also be disposed in the CU and/or the DU. Optionally, the CU may be further split into a CU-CP and a CU-UP. One or more AI models are disposed in the CU-CP and/or the CU-UP.

The AI module is configured to implement a corresponding AI function. AI modules deployed in different apparatuses may be the same or different. A model of the AI module is configured based on different parameters, and the AI module may implement different functions. The model of the AI module may be configured based on one or more of the following parameters: a structure parameter (for example, at least one of the following: a quantity of layers of a neural network, a width of the neural network, a connection relationship between layers, a weight of a neuron, an activation function of the neuron, or a bias in the activation function), an input parameter (for example, a type of the input parameter and/or a dimension of the input parameter), or an output parameter (for example, a type of the output parameter and/or a dimension of the output parameter). The bias in the activation function may also be referred to as a bias of a neural network.

One AI module may have one or more models. One piece of output may be obtained through inference based on one model, and the output includes one or more parameters. Learning processes, training processes, or inference processes of different models may be deployed on different nodes or devices, or may be deployed on a same node or device.

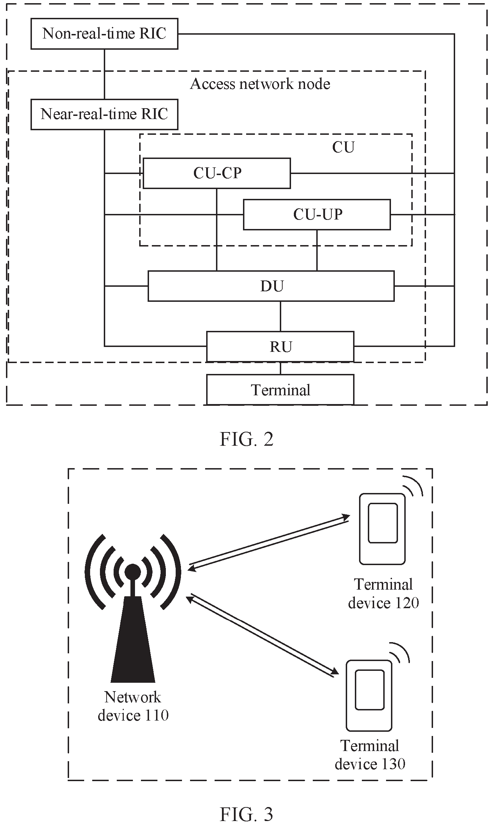

FIG. 2 is a diagram of another application framework to which an embodiment of this application is applicable. As shown in FIG. 2, the communication system includes a RIC. For example, the RIC may be AI modules 117 and 118 shown in FIG. 1, and is configured to implement an AI-related function. The RIC includes a near-real-time RIC (near-real-time RIC, near-RT RIC) and a non-real-time RIC (non-real-time RIC, Non-RT RIC). The non-real-time RIC mainly processes non-real-time information, for example, latency-insensitive data. A latency of the data may be at a second level. A real-time RIC mainly processes near-real-time information, for example, delay-sensitive data. A delay of the data is on the order of tens of milliseconds.

The near-real-time RIC is configured to perform model training and inference, for example, is configured to train an AI model and perform inference by using the AI model. The near-real-time RIC may obtain information on a network side and/or a terminal side from a RAN node (for example, a CU, a CU-CP, a CU-UP, a DU, and/or an RU) and/or a terminal. The information may be used as training data or inference data.

Optionally, the near-real-time RIC may deliver an inference result to the RAN node and/or the terminal.

Optionally, the inference result may be exchanged between the CU and the DU and/or between the DU and the RU. For example, the near-real-time RIC delivers the inference result to the DU, and the DU sends the inference result to the RU.

The non-real-time RIC is also configured to perform model training and inference, for example, is configured to train an AI model and perform inference by using the model. The non-real-time RIC may obtain information on a network side and/or a terminal side from a RAN node (for example, a CU, a CU-CP, a CU-UP, a DU, and/or an RU) and/or a terminal. The information may be used as training data or inference data, and an inference result may be delivered to the RAN node and/or the terminal.

Optionally, the inference result may be exchanged between the CU and the DU and/or between the DU and the RU. For example, the non-real-time RIC delivers the inference result to the DU, and the DU sends the inference result to the RU.

Alternatively, the near-real-time RIC and the non-real-time RIC each may be independently disposed as an apparatus. Optionally, the near-real-time RIC and the non-real-time RIC may alternatively be used as a part of another device. For example, the near-real-time RIC is disposed in the RAN node (for example, in the CU or the DU), and the non-real-time RIC is disposed in an OAM, a cloud server, a core network device, or another device.

FIG. 3 is a diagram of a communication system to which an embodiment of this application is applicable. As shown in FIG. 3, the communication system may include at least one network device, for example, a network device 110. The communication system 100 may further include at least one terminal device, for example, a terminal device 120 and a terminal device 130. The network device 110 may communicate with the terminal device (for example, the terminal device 120 and the terminal device 130) through a radio link. Communication devices, for example, the network device 110 and the terminal device 120, in the communication system may communicate with each other by using a multiple-antenna technology.

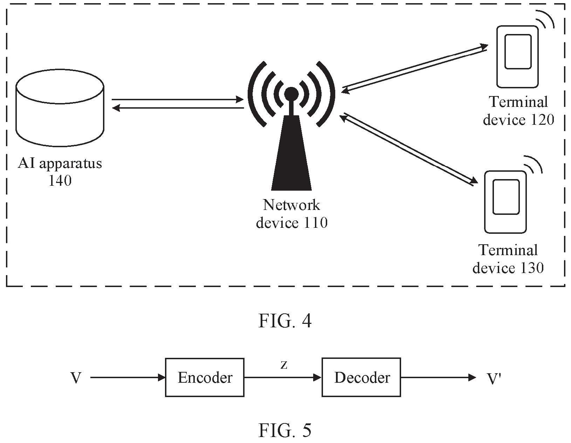

FIG. 4 is a diagram of another communication system to which an embodiment of this application is applicable. In comparison with the communication system shown in FIG. 3, the communication system shown in FIG. 4 further includes an AI apparatus 140, configured to perform an AI-related operation, for example, constructing a training dataset or training an AI model.

In a possible implementation, a network device 110 may send data related to training of the AI model to the AI apparatus 140, and the AI apparatus 140 constructs the training dataset and trains the AI model. For example, the data related to training of the AI model may include data reported by a terminal device. The AI apparatus 140 may send a result of an operation related to the AI model to the network device 110, and forward the result of the operation related to the AI model to the terminal device via the network device 110. For example, the result of the operation related to the AI model may include at least one of the following: a trained AI model, an evaluation result or a test result for the model, or the like. For example, a part of the trained AI model is deployed on the network device 110, and the other part is deployed on the terminal device. Alternatively, the trained AI model is deployed on the network device 110. Alternatively, the trained AI model is deployed on the terminal device.

It should be understood that FIG. 4 is described by using only an example in which the AI apparatus 140 is directly connected to the network device 110. In another scenario, the AI apparatus 140 may alternatively be connected to the terminal device. The AI apparatus 140 may alternatively be connected to both the network device 110 and the terminal device. The AI apparatus 140 may alternatively be connected to the network device 110 through a third-party apparatus. Therefore, a connection relationship between the AI apparatus and another apparatus is not limited in this application.

The AI apparatus 140 may alternatively be disposed on a network device and/or a terminal device as a module, for example, disposed on the network device 110 or the terminal device shown in FIG. 3.

It should be noted that, FIG. 3 and FIG. 4 are merely simplified diagrams of examples for ease of understanding. For example, the communication system may further include another device, for example, may further include a wireless relay device and/or a wireless backhaul device, which are/is not shown in FIG. 3 and FIG. 4. In actual application, the communication system may include a plurality of network devices (for example, the network device 110 and a network device 150 (not shown in FIG. 3)), or may include a plurality of terminal devices. Therefore, quantities of network devices and terminal devices included in the communication system are not limited in this application.

Then, a part of technical concepts in this application are briefly described.

### (1) AI model:

The AI model is an algorithm or a computer program that can implement an AI function. The AI model represents a mapping relationship between an input and an output of the model. The AI model may be understood as a function model that maps input of a specific dimension to output of a specific dimension. A model parameter of the AI model is obtained through machine learning training. For example, f(x) = a *_{*} x² + b* is a quadratic function model, and the model may be considered as the AI model. a and b correspond to parameters of the AI model, and may be obtained through machine learning training. The AI model may also be referred to as a model, an AI function, or a function. One AI function may correspond to one or more AI models.

A type of the AI model may be a neural network, a linear regression model, a decision tree model, a support vector machine (support vector machine, SVM), a Bayesian network, a Q-learning model, or another machine learning (machine learning, ML) model.

### (2) Two-side model:

The two-side model may also be referred to as a bilateral model, a cooperative model, a dual model, a two-side (two-side) model, or the like. The two-sided model is a model including a plurality of submodels. The plurality of submodels included in the model need to match each other. The plurality of submodels may be deployed on different nodes.

Embodiments of this application relate to an encoder configured to compress CSI and a decoder configured to recover CSI. The encoder and the decoder are used in a matching manner. It may be understood that the encoder and the decoder are paired AI models. One encoder may include one or more AI models, and a decoder matching the encoder also includes one or more AI models. The encoder and the decoder that are used in a matching manner include a same quantity of AI models, with a one-to-one correspondence between them. The encoder may further include a quantization module, and the quantization module may be configured to perform quantization processing on output of the AI model in the encoder. The decoder may include a dequantization module, and the dequantization module may be configured to perform dequantization processing on received feedback information of channel information, to obtain input of the AI model in the decoder. Dequantization may also be replaced with inverse quantization.

In a possible design, a set of encoder (encoder) and decoder (decoder) that are used in cooperation may be two parts in a same auto-encoder (auto-encoders, AE). An AE model in which an encoder and a decoder are separately deployed on different nodes is a typical bilateral model. The encoder and the decoder of the AE model are usually an encoder and a decoder that are jointly trained and that are used in cooperation. The auto-encoder is an unsupervised learning neural network, and is characterized by using input data as label data. Therefore, the auto-encoder may also be understood as a self-supervised learning neural network. The auto-encoder may be configured to compress and recover data. For example, the encoder in the auto-encoder may compress (encode) data A to obtain data B, and the decoder in the auto-encoder may decompress (decode) the data B to recover the data A. Alternatively, it may be understood that the decoder is an inverse operation of the encoder. For descriptions of the encoder and the decoder, refer to FIG. 5.

FIG. 5 is a diagram of a relationship between an encoder and a decoder. As shown in FIG. 5, the encoder processes input V to obtain a processed result z, and the decoder can decode output z of the encoder into expected output V'.

The auto-encoder model in this embodiment of this application may include an encoder deployed on a terminal device side and a decoder deployed on a network device side, an encoder deployed on a terminal device side and a decoder deployed on another terminal device side, or an encoder deployed on a network device side and a decoder deployed on another network device side. In this application, a model on the encoder side is referred to as a first AI model, and a model on the decoder side is referred to as a second AI model.

### (3) Neural network (neural network, NN):

The neural network is a specific implementation form of AI or machine learning. According to a universal approximation theorem, the neural network can approximate any continuous function in theory, so that the neural network has a capability of learning any mapping.

The neural network may include neural units, and the neural unit may be an operation unit that uses xₛ and an intercept 1 as input. A neural network is a network formed by connecting many single neurons together. To be specific, an output of a neuron may be an input of another neuron. An input of each neuron may be connected to a local receptive field of a previous layer to extract a feature of the local receptive field. The local receptive field may be a region including several neurons.

For example, a type of an AI model is a neural network. The AI model in this disclosure may be a deep neural network (deep neural network, DNN). According to a network construction manner, the DNN may include a feed forward neural network (feed forward neural network, FNN), a convolutional neural network (convolutional neural network, CNN), a recurrent neural network (recurrent neural network, RNN), and the like.

The CNN is a neural network dedicated to processing data of a grid-like structure. For example, both time series data (timeline discrete sampling) and image data (two-dimensional discrete sampling) may be considered as the data of the grid-like structure. The CNN performs a convolution operation by extracting partial information through a window with a fixed size, instead of performing an operation based on all input information at one time. This greatly reduces a computational load of model parameters. In addition, based on different types of information extracted through the window (for example, a person and an object in a same image are information of different types), a different convolution kernel operation may be used for each window, so that the CNN can better extract features of input data.

The RNN is a DNN network using feedback time sequence information. Inputs of the RNN include a new input value at a current moment and an output value of the RNN at a previous moment. The RNN is suitable for obtaining sequence features that are correlated in time, and is particularly suitable for applications such as speech recognition and channel encoding and decoding.

A characteristic of the FNN network is that every two neurons at adjacent layers are completely connected. Therefore, the FNN usually requires a large amount of storage space, resulting in high computing complexity.

The FNN, the CNN, and the RNN are all constructed based on neurons. As described above, each neuron performs a weighted summation operation on input values of the neuron, and outputs a result of weighted summation through a non-linear function. A weight for performing the weighted summation operation by the neuron in the neural network and the non-linear function are referred to as parameters of the neural network. Parameters of all neurons in a neural network form parameters of the neural network.

### (4) Dataset:

A dataset refers to data used for model training, validation, and testing in machine learning. A quantity and a quality of the data affect machine learning effect.

In the machine learning field, a ground truth (ground truth) is usually considered as accurate data or true data.

The training dataset is used to train an AI model. The training dataset may include an input of the AI model, or include an input and a target output of the AI model. The training dataset includes one or more pieces of training data. The training data may include a training sample input to the AI model, and may also include the target output of the AI model. The target output may also be referred to as a label, a sample label, or a label sample. The label is a ground truth.

In the communication field, the training dataset may include simulated data collected by a simulation platform, may include experimental data collected in an experiment scenario, or may include actual measured data collected in an actual communication network. Geographical environments and channel conditions in which data is generated are different. For example, indoor or outdoor environments, moving speeds, frequency bands, or antenna configurations are different. Therefore, collected data may be classified when the data is obtained. For example, data with a same channel propagation environment and a same antenna configuration is classified into one type.

Model training is essentially learning some features of training data from the training data. In a process of training an AI model (for example, a neural network model), because an output of the AI model is expected to be as close as possible to a value that is actually expected to be predicted, a current predicted value of the network may be compared with a target value that is actually expected, and then a weight vector of each layer of the AI model is updated based on a difference between the two (certainly, an initialization process is usually performed before the first update, that is, a parameter is preconfigured for each layer of the AI model). For example, if the predicted value of the network is larger, the weight vector is adjusted to obtain a smaller predicted value. The weight vector is continuously adjusted until the AI model can predict the target value that is actually expected or a value that is quite close to the target value that is actually expected. Therefore, "how to obtain, through comparison, a difference between the predicted value and the target value" needs to be predefined. This is a loss function (loss function) or an objective function (objective function). The loss function and the objective function are important equations that measure the difference between the predicted value and the target value. The loss function is used as an example. A larger output value (loss) of the loss function indicates a greater difference. In this case, training of the AI model is a process of minimizing the loss as much as possible, so that a value of the loss function is less than a threshold, or the value of the loss function meets a target requirement. For example, the AI model is a neural network, and adjusting a model parameter of the neural network includes adjusting at least one of the following parameters: a quantity of layers of the neural network, a width of the neural network, a weight of a neuron, or a parameter in an activation function of a neuron.

The inference data may be used as an input of a trained AI model for inference by the AI model. In a process of model inference, the inference data may be input to the AI model to obtain a corresponding output, namely, an inference result.

### (5) AI model design:

The AI model design mainly includes a data collection phase (for example, collection of training data and/or inference data), a model training phase, and a model inference phase, and may further include an inference result application phase.

Training processes of different models may be deployed on different devices or nodes, or may be deployed on a same device or node. Inference processes of different models may be deployed on different devices or nodes, or may be deployed on a same device or node. A model training phase being completed by the terminal device is used as an example. After training the encoder and the decoder that are paired, the terminal device may send a model parameter of the decoder to the network device. A model training phase being completed by the network device is used as an example. After training the encoder and the decoder that are paired, the network device may indicate a model parameter of the encoder to the terminal device. A model training phase being completed by the independent AI network element is used as an example. After training the encoder and the decoder that are paired, the AI network element may send a model parameter of the encoder to the terminal device, and send a model parameter of the decoder to the network device. Then a model inference phase corresponding to the encoder is performed on the terminal device, and a model inference phase corresponding to the decoder is performed on the network device.

The model parameter may include one or more of the following: a structure parameter of the model (for example, a quantity of layers of the model and/or a weight), an input parameter of the model (for example, an input dimension or a quantity of input ports), or an output parameter of the model (for example, an output dimension or a quantity of output ports). It may be understood that the input dimension may be a size of one piece of input data, where for example, when the input data is one sequence, an input dimension corresponding to the sequence may indicate a length of the sequence; and the quantity of input ports may be an amount of input data. Similarly, the output dimension may be a size of one piece of output data, where for example, when the output data is one sequence, an output dimension corresponding to the sequence may indicate a length of the sequence; and the quantity of output ports may be an amount of output data.

### (6) Channel information:

In a communication system (for example, an LTE communication system or an NR communication system), a network device determines, based on channel information, one or more of configurations such as a resource, an MCS, and precoding of a downlink data channel for scheduling a terminal device. It may be understood that the channel information may also be referred to as channel state information (channel state information, CSI) or channel environment information, and is information that can reflect a channel characteristic and channel quality.

Channel information measurement means that a receive end obtains channel information based on a reference signal sent by a transmit end, that is, estimates the channel information by using a channel estimation method. For example, the reference signal may include one or more of a channel state information reference signal (channel state information reference signal, CSI-RS), a synchronization signal/broadcast channel block (synchronization signal/physical broadcast channel block, SSB), a channel sounding reference signal (sounding reference signal, SRS), a demodulation reference signal (demodulation reference signal, DMRS), and the like. One or more of the CSI-RS, the SSB, the DMRS, and the like may be used to measure downlink channel information. The SRS and/or the DMRS may be used to measure uplink channel information.

The channel information may be determined based on a channel measurement result of a reference signal. Alternatively, the channel information may be the channel measurement result of the reference signal. In this embodiment of this application, the channel measurement result or the channel measurement result of the reference signal may also be replaced with the channel information.

An FDD communication scenario is used as an example. In the FDD communication scenario, because uplink and downlink channels do not have reciprocity or reciprocity between the uplink and downlink channels cannot be ensured, a network device needs to obtain downlink CSI in a manner of performing uplink feedback through the terminal device. The network device usually sends a downlink reference signal to the terminal device, and the terminal device receives the downlink reference signal. Because the terminal device knows sending information of the downlink reference signal, the terminal device may perform channel measurement and interference measurement based on the received downlink reference signal, and estimate (measure) a downlink channel that the downlink reference signal passes through. The terminal device generates downlink CSI based on a downlink channel matrix obtained through measurement. The terminal device generates a CSI report in a predefined-protocol manner or in a manner configured by the network device, and feeds back the CSI report to the network device, so that the network device obtains the downlink CSI.

In this application, a meaning of the CSI is broader than a meaning of the CSI in a conventional solution, and is not limited to a channel quality indicator (channel quality indication, CQI), a precoding matrix indicator (precoding matrix indicator, PMI), a rank indicator (rank indicator, RI), or a CSI-RS resource indicator (CSI-RS resource indicator, CRI). The CSI may alternatively be one or more of channel response information (for example, a channel response matrix, frequency domain channel response information, or time domain channel response information), weight information corresponding to a channel response, reference signal received power (reference signal received power, RSRP), a signal to interference plus noise ratio (signal to interference plus noise ratio, SINR), or the like.

The RI is used to indicate a recommended quantity of layers for downlink transmission at a receive end of the reference signal, for example, the terminal device. The CQI is used to indicate a modulation and coding scheme that can be supported by a current channel condition and that is determined by the receive end of the reference signal, for example, the terminal device. The PMI is used to indicate recommended precoding at the receive end of the reference signal, for example, the terminal device. A quantity of precoding layers indicated by the PMI corresponds to the RI.

As described above, channel information may be obtained by measuring the reference signal. A compression operation and/or a quantization operation may be performed on the channel information to obtain the feedback information. The feedback information may be reported by using a channel information report. Therefore, the feedback information may also be referred to as a channel report. In embodiments of this application, one channel report may include at least one sub-channel report.

The channel information may be recovered by performing a decompression operation and/or a dequantization operation on the feedback information.

The feedback information may also be referred to as feedback information of channel information, feedback information of CSI, CSI feedback information, compressed information, compressed information of channel information, compressed information of CSI, compressed channel information, compressed CSI, or the like.

The recovered channel information may also be referred to as CSI recovery information.

As a scale of an antenna array in the MIMO system continuously increases, a quantity of antenna ports that can be supported increases, and dimensions of a corresponding channel matrix and precoding matrix also increase. To enable the terminal device to estimate (measure) a downlink channel, overheads of delivering a reference signal by the network device increase. In addition, an error of approximately representing a large-scale channel matrix and precoding matrix by using a limited predefined codeword increases. A method for improving channel recovery precision is to increase a quantity of codewords in a codebook. However, this also increases overheads of CSI feedback (including one or more of corresponding numbers of codewords and weighting coefficients), which results in reduced available resources for data transmission and causes a loss in system capacity.

An AI technology is introduced into a wireless communication network to generate an AI model-based CSI feedback mode, that is, AI-CSI feedback. The terminal device compresses and feeds back CSI by using an AI model, and the network device recovers the compressed CSI by using an AI model. In AI-based CSI feedback, a sequence (such as a bit sequence) is transmitted, and overheads are lower than that of conventional CSI feedback. In addition, the AI model has a stronger nonlinear feature extraction capability, and can more effectively compress and represent channel information and more effectively recover a channel based on feedback information compared with a conventional solution.

CSI feedback may be implemented based on an AI model of an AE. FIG. 5 is used as an example. An encoder in FIG. 5 may be a CSI generator, and a decoder may be a CSI reconstructor. For example, the encoder may be deployed on the terminal device, and the decoder may be deployed on the network device.

Channel information V is encoded by the encoder to generate CSI feedback information z. The channel information is reconstructed by using the decoder, that is, recovered channel information V' is obtained.

The channel information V may be obtained by measuring the channel information. For example, the channel information V may include a feature vector matrix of a downlink channel (a matrix formed by feature vectors). The encoder processes the eigenvector matrix of the downlink channel to obtain the CSI feedback information z. In other words, performing a compression operation and/or a quantization operation on a feature matrix based on a codebook in a related solution is replaced with the operation of processing the feature matrix by the encoder to obtain the CSI feedback information z. The recovered channel information V' may be obtained by processing the CSI feedback information z by the decoder.

The following further describes examples of a training process and an inference process of the AI model in embodiments of this application.

Training data for training the AI model includes a training sample and a sample label. For example, the training sample is channel information measured by the terminal device, and the sample label is real channel information, that is, ground truth CSI. When the encoder and the decoder belong to a same auto-encoder, the training data may include only the training sample. In other words, the training sample is the sample label.

In the wireless communication field, the ground truth CSI may be high-precision CSI.

A specific training process is as follows: A model training node processes channel information, namely, the training sample, by using the encoder, to obtain CSI feedback information; processes the feedback information by using the decoder, to obtain recovered channel information, namely, CSI recovery information; and then calculates a difference between the CSI recovery information and a corresponding sample label, that is, a value of a loss function, and updates parameters of the encoder and the decoder based on the value of the loss function, to minimize the difference between the recovered channel information and the corresponding sample label, that is, minimize the loss function. For example, the loss function may be a minimum mean square error (mean square error, MSE) or a cosine similarity. The foregoing operations may be repeated to obtain the encoder and the decoder that meet a target requirement. The model training node may be the terminal device, the network device, or another network element having an AI function in the communication system. The AI model may be implemented by using a hardware circuit, software, or a combination of software and hardware. A non-limitative example of the software includes program code, a program, a subprogram, an instruction, an instruction set, code, a code segment, a software module, an application program, a software application program, or the like.

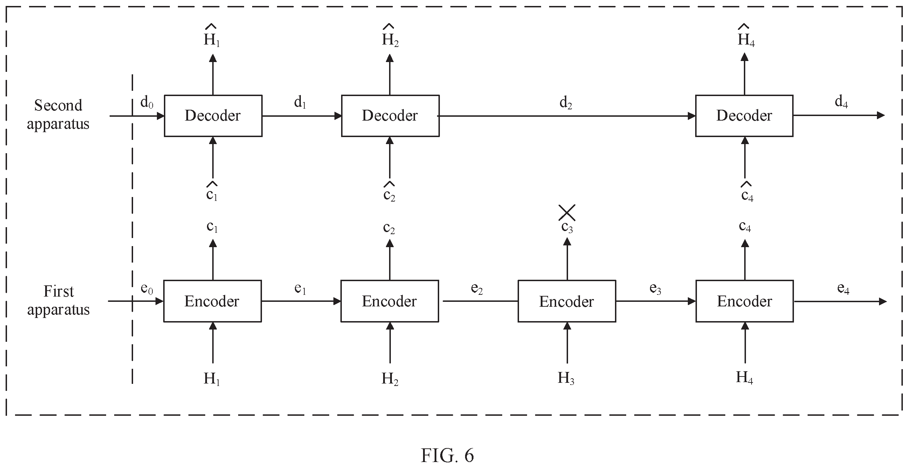

As described in the background part, an AI model is deployed on each of a first apparatus (for example, a terminal device) and a second apparatus (for example, a network device). For example, a first AI model (for example, an encoder) is deployed on the first apparatus, and a second AI model (for example, a decoder) is deployed on the second apparatus. The first apparatus may use a channel measurement result (represented by H) as input of the first AI model, and output a channel report (represented by c). The second apparatus may use the received channel report (represented by ĉ) as input of the second AI model, and output a recovered channel measurement result (represented by Ĥ). When the first apparatus and the second apparatus have different paces in updating a value of state information of an AI model, feedback performance of a channel report may be lost. For details, refer to FIG. 6.

FIG. 6 is a diagram of an application scenario according to an embodiment of this application. Details are shown in FIG. 6.
1. The first apparatus inputs e₀ (which is a value of state information of the first AI model) and H₁ to the first AI model, outputs c₁, and sends c₁ to the second apparatus. The first apparatus uses H₁ to update the value of the state information of the first AI model to e₁. The second apparatus inputs d₀ (which is a value of state information of the second AI model) and $\hat{{c}_{1}}$(obtained by the second apparatus based on receiving of c₁) to the second AI model, and outputs $\hat{{H}_{1}}$. The second apparatus uses $\hat{{c}_{1}}$ to update the value of the state information of the second AI model to d₁.
2. The first apparatus inputs e₁ and H₂ to the first AI model, outputs c₂, and sends c₂ to the second apparatus. The first apparatus uses H₂ to update the value of the state information of the first AI model to e₂. The second apparatus inputs d₁ and $\hat{{c}_{2}}$ (obtained by the second apparatus based on receiving of c₂) to the second AI model, and outputs $\hat{{H}_{2}}$. The second apparatus uses $\hat{{c}_{2}}$ to update the value of the state information of the second AI model to d₂.
3. The first apparatus inputs e₂ and H₃ to the first AI model, outputs c₃, and fails to send c₃ to the second apparatus. The first apparatus uses H₃ to update the value of the state information of the first AI model to e₃. The second apparatus maintains the value of the state information of the second AI model unchanged.
4. The first apparatus inputs e₃ and H₄ to the first AI model, outputs c₄, and sends c₄ to the second apparatus. The first apparatus uses H₄ to update the value of the state information of the first AI model to e₄. The second apparatus inputs d₂ and $\hat{{c}_{4}}$ to the second AI model, and outputs $\hat{{H}_{4}}$. The second apparatus uses $\hat{{c}_{4}}$ to update the value of the state information of the second AI model to d₄.

In conclusion, a transmission failure of the channel report may cause a pace inconsistency between the first apparatus and the second apparatus in updating the value of the state information of the AI model, which may cause a loss of feedback performance of a channel report.

In view of this, this application provides a communication method and a communication apparatus, so that the first apparatus and the second apparatus have a consistent pace for the value of the state information of the AI model, so that feedback performance of the channel report can be improved, and channel information recovery performance and robustness of the recovery performance can be improved.

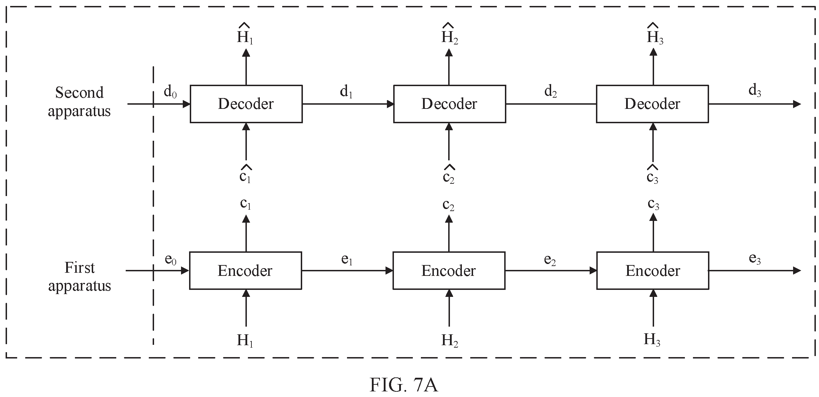

For a description that the first apparatus and the second apparatus have a consistent pace in updating the value of the state information of the AI model, refer to FIG. 7A to FIG. 7C.

FIG. 7A to FIG. 7C are diagrams illustrating that the first apparatus and the second apparatus have a consistent pace in updating the value of state information of the updated AI model. As shown in FIG. 7A to FIG. 7C:

In a case in which all channel information is successfully fed back, an example case is shown in FIG. 7A.
1. The first apparatus inputs e₀ and H₁ to the first AI model, outputs c₁, and sends c₁ to the second apparatus. The first apparatus uses H₁ to update the value of the state information of the first AI model to e₁. The second apparatus inputs d₀ and $\hat{{c}_{1}}$ to the second AI model, and outputs $\hat{{H}_{1}}$. The second apparatus uses $\hat{{c}_{1}}$ to update the value of the state information of the second AI model to d₁.
2. The first apparatus inputs e₁ and H₂ to the first AI model, outputs c₂, and sends c₂ to the second apparatus. The first apparatus uses H₂ to update the value of the state information of the first AI model to e₂. The second apparatus inputs d₁ and $\hat{{c}_{2}}$ to the second AI model, and outputs $\hat{{H}_{2}}$. The second apparatus uses $\hat{{c}_{2}}$ to update the value of the state information of the second AI model to d₂.
3. The first apparatus inputs e₂ and H₃ to the first AI model, outputs c₃, and sends c₃ to the second apparatus. The first apparatus uses H₃ to update the value of the state information of the first AI model to e₃. The second apparatus inputs d₃ and $\hat{{c}_{3}}$ (obtained by the second apparatus based on receiving of c₃) to the second AI model, and outputs $\hat{{H}_{3}}$. The second apparatus uses $\hat{{c}_{3}}$ to update the value of the state information of the second AI model to d₃.

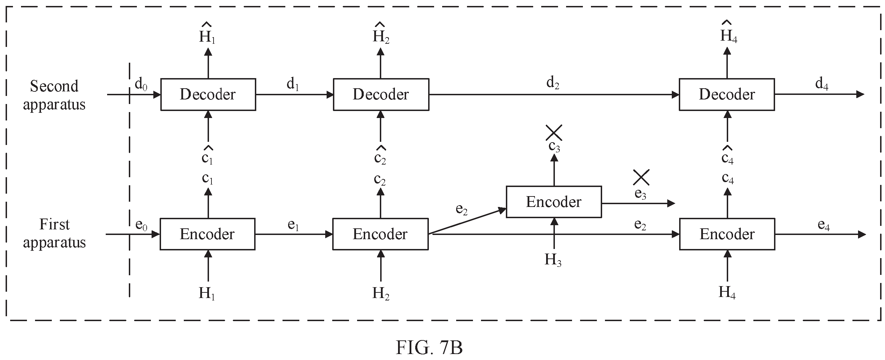

When not all the channel information is successfully fed back, one of the cases is shown in FIG. 7B.
1. The first apparatus inputs e₀ and H₁ to the first AI model, outputs c₁, and sends c₁ to the second apparatus. The first apparatus uses H₁ to update the value of the state information of the first AI model to e₁. The second apparatus inputs d₀ and $\hat{{c}_{1}}$ to the second AI model, and outputs $\hat{{H}_{1}}$. The second apparatus uses $\hat{{c}_{1}}$ to update the value of the state information of the second AI model to d₁.
2. The first apparatus inputs e₁ and H₂ to the first AI model, outputs c₂, and sends c₂ to the second apparatus. The first apparatus uses H₂ to update the value of the state information of the first AI model to e₂. The second apparatus inputs d₁ and $\hat{{c}_{2}}$ to the second AI model, and outputs $\hat{{H}_{2}}$. The second apparatus uses $\hat{{c}_{2}}$ to update the value of the state information of the second AI model to d₂.
3. When the first apparatus fails to successfully send c₃ obtained based on H₃ to the second apparatus, the first apparatus inputs e₂ and H₄ to the first AI model, outputs c₄, and sends c₄ to the second apparatus. The first apparatus uses H₄ to update the value of the state information of the first AI model to e₄. The second apparatus inputs d₂ and $\hat{{c}_{4}}$ to the second AI model, and outputs $\hat{{H}_{4}}$. The second apparatus uses $\hat{{c}_{4}}$ to update the value of the state information of the second AI model to d₄.

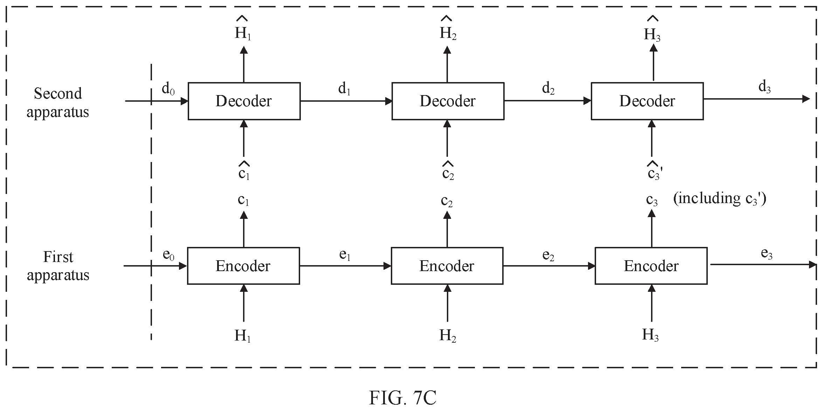

When not all the channel information is successfully fed back, another case is shown in FIG. 7C.
1. The first apparatus inputs e₀ and H₁ to the first AI model, outputs c₁, and sends c₁ to the second apparatus. The first apparatus uses H₁ to update the value of the state information of the first AI model to e₁. The second apparatus inputs d₀ and $\hat{{c}_{1}}$ to the second AI model, and outputs $\hat{{H}_{1}}$. The second apparatus uses $\hat{{c}_{1}}$ to update the value of the state information of the second AI model to d₁.
2. The first apparatus inputs e₁ and H₂ to the first AI model, outputs c₂, and sends c₂ to the second apparatus. The first apparatus uses H₂ to update the value of the state information of the first AI model to e₂. The second apparatus inputs d₁ and $\hat{{c}_{2}}$ to the second AI model, and outputs $\hat{{H}_{2}}$. The second apparatus uses $\hat{{c}_{2}}$ to update the value of the state information of the second AI model to d₂.
3. The first apparatus inputs e₂ and H₃ to the first AI model, outputs c₃ (including partial content ${c}_{3}^{′}$), and sends ${c}_{3}^{′}$ to the second apparatus. The first apparatus uses H₃ to update the value of the state information of the second AI model to e₃. The second apparatus inputs d₂ and $\hat{{c}_{3}^{′}}$ to the second AI model, and outputs $\hat{{H}_{3}}$. The second apparatus uses $\hat{{c}_{3}^{′}}$ to update the value of the state information of the second AI model to d₃.

c₁, c₂, and c₃ are all channel reports including all content, and ${c}_{3}^{′}$ is a channel report including partial content.

The state information in this application may include any one or more of the following: cache information, storage information, intermediate information (for example, intermediate information generated by the AI model), internal information (for example, internal information of a device on which the AI model is deployed or internal information of the AI model), parameter information generated or updated by the AI model, and the like.

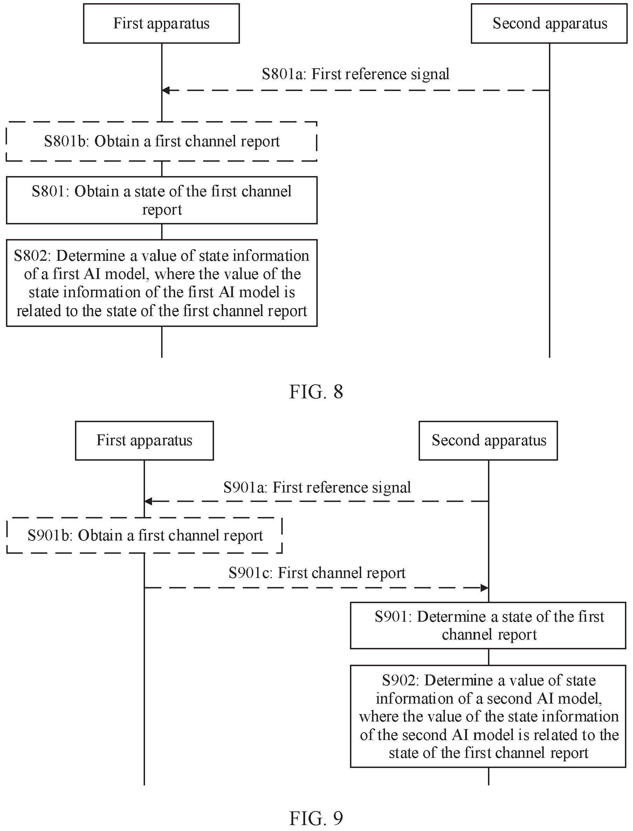

Both the first apparatus and the second apparatus may determine, based on the state of the channel report, whether to update the value of the state information of the AI model, so that the first apparatus and the second apparatus may have a consistent pace in updating the value of the state information of the AI model. The following further describes this with reference to FIG. 8 to FIG. 10.

For ease of understanding and description, the following describes the communication method in embodiments of this application by using interaction between the first apparatus and the second apparatus as an example.

The first apparatus may be a device on a first AI model side, or may be a chip or a circuit of the device on the first AI model side. The device on the first AI model side may be replaced with a device on a terminal device side or a device on a network device side. The terminal device side may include at least one of a terminal device or an AI entity on the terminal device side. The AI entity on the terminal device side may be the terminal device itself, or may be an AI entity that serves the terminal device, for example, a server, such as an OTT server or a cloud server. The network device side may include at least one of a network device or an AI entity on the network device side. The AI entity on the network device side may be the network device itself, or may be an AI entity that serves the network device, for example, a RIC, an OAM, or a server, such as an OTT server or a cloud server.

The second apparatus may be a device on a second AI model side, or may be a chip or a circuit used for the device on the second AI model side. The device on the second AI model side may be replaced with a device on a terminal device side or a device on a network device side. The terminal device side may include at least one of a terminal device or an AI entity on the terminal device side. The AI entity on the terminal device side may be the terminal device itself, or may be an AI entity that serves the terminal device, for example, a server, such as an OTT server or a cloud server. The network device side may include at least one of a network device or an AI entity on the network device side. The AI entity on the network device side may be the network device itself, or may be an AI entity that serves the network device, for example, a RIC, an OAM, or a server, such as an OTT server or a cloud server.

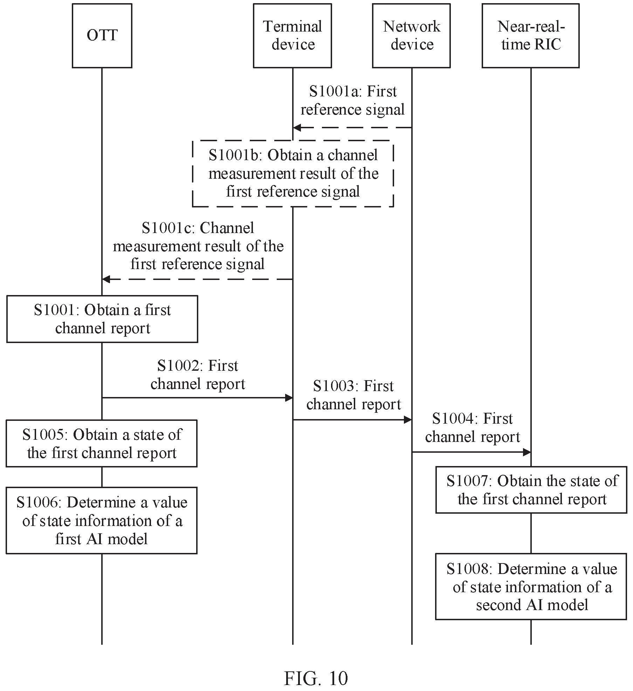

For ease of description, the first apparatus shown in FIG. 8 and FIG. 9 may be a terminal device, and the second apparatus may be a network device. The first apparatus and the second apparatus shown in FIG. 10 may be AI entities that respectively serve the terminal device and the network device.

The following describes a communication method and a communication apparatus in embodiments of this application with reference to the accompanying drawings.

FIG. 8 is a schematic interaction flowchart of a communication method according to an embodiment of this application. As shown in FIG. 8, the method includes the following steps.

Optionally, S801a: A second apparatus sends a first reference signal to a first apparatus.

Correspondingly, the first apparatus receives the first reference signal (referring to a reference signal corresponding to H₃ in FIG. 6).

For example, the first reference signal is used for channel measurement or used to obtain channel information. The first apparatus may obtain the channel information, a channel report, channel measurement information, or the like by measuring the first reference signal.

In an example, the first reference signal may be a CSI-RS.

In another example, the first reference signal may be a DMRS.

In conclusion, a type of the first reference signal is not limited in this embodiment of this application. The first reference signal may be a signal used for channel measurement in an existing standard, or may be a signal used for channel measurement in a future standard. This is not limited herein.

In a possible implementation, before the second apparatus sends the first reference signal to the first apparatus, the second apparatus has sent at least one reference signal to the first apparatus. For ease of description, the at least one reference signal may be referred to as a historical reference signal.

In a possible implementation, a reference signal whose sending time unit is before a sending time unit of the first reference signal may be referred to as the historical reference signal. In other words, the sending time unit of the historical reference signal is before the sending time unit of the first reference signal.

For ease of description, a second reference signal (referring to a reference signal corresponding to H₂ in FIG. 6) is used to represent the historical reference signal in the following. A sending time unit of the second reference signal is before the sending time unit of the first reference signal. In other words, after sending the second reference signal to the first apparatus, the second apparatus sends the first reference signal to the first apparatus. Alternatively, after the second apparatus sends the second reference signal to the first apparatus, a next reference signal sent by the second apparatus to the first apparatus is the first reference signal.

The first apparatus may feed back, to the second apparatus after receiving one reference signal, a channel report of the reference signal, or may feed back, to the second apparatus after receiving a plurality of reference signals, channel reports respectively corresponding to the plurality of reference signals. This is not limited. For ease of description, the following does not focus on a time association between receiving a reference signal by the first apparatus and feeding back corresponding channel report by the first apparatus.

In embodiments of this application, the time unit includes but is not limited to: time, a time period, a moment, a slot, a symbol, a mini symbol, or the like. In addition, for explanations of the time unit that appears in the following, refer to the description herein. Details are not described again.

Optionally, S801b: The first apparatus obtains a first channel report.

In a possible implementation, that the first apparatus obtains the first channel report includes:

The first apparatus determines the first channel report based on a first value of state information of a first AI model. In other words, the first channel report is determined based on the first value of the state information of the first AI model.

For example, the first apparatus measures the first reference signal, obtains a channel measurement result corresponding to the first reference signal, and inputs the channel measurement result of the first reference signal (referring to H₃ in FIG. 6) and the first value of the state information of the first AI model (referring to e₂ in FIG. 6) into the first AI model, to obtain the first channel report (referring to c₃ in FIG. 6).

When the first channel report is determined based on the first value of the state information of the first AI model, the first apparatus may determine, based on a state of the first channel report, whether to update the first value of the state information of the first AI model. When the second apparatus does not receive the first channel report, the second apparatus does not update a value of state information of a second AI model, and the first apparatus does not update the value of the state information of the first AI model. In this way, the first apparatus and the second apparatus have a consistent pace in updating the value of the state information of the AI model, thereby improving feedback performance of the channel report, and further improving channel information recovery performance and robustness of the recovery performance.

The first value of the state information of the first AI model is determined by the first apparatus by updating a second value (referring to e₁ in FIG. 6) of the state information of the first AI model by using a channel measurement result (referring to H₂ in FIG. 6) of the second reference signal. The first apparatus may obtain a second channel report (referring to c₂ in FIG. 6) based on the second value and the channel measurement result of the second reference signal.

In other words, each time the first apparatus obtains a channel report, the first apparatus may update the value of the state information of the first AI model by using the channel report. For example, the first apparatus updates the second value by using the second channel report, to obtain the first value. Correspondingly, when the value of the state information of the first AI model is updated, the first apparatus may update the first value by using the first channel report, and the value obtained through update may be used to generate a next channel report.

In this embodiment of this application, the first apparatus may generate a channel report based on channel report configuration information of the network device or a predefined configuration. For example, a format of the channel report generated by the first apparatus conforms to a configuration of the network device or the predefined configuration. In other words, the second apparatus may understand the channel report generated by the first apparatus. The channel report configured based on the channel report configuration information may also be referred to as an expected channel report or a target channel report. The channel report configured based on the channel report configuration information or the predefined configuration may be understood as a channel report including all content.

S801: The first apparatus obtains the state of the first channel report.

For example, after the first apparatus obtains the first channel report, the first apparatus may send the first channel report to the second apparatus, the first apparatus may not send the first channel report to the second apparatus, or the first apparatus may send, to the second apparatus, the first channel report including partial content. Therefore, for different scenarios, the first channel report has a corresponding state.

Examples are as follows.

### Scenario #1:

The first apparatus sends the first channel report to the second apparatus (referring to FIG. 7A).

When the first apparatus sends the first channel report to the second apparatus, the first channel report is in a transmission completed state, is not in a discarded state, is not in an ignored state, is not in a transmission skipped state, or the like.

In this way, the first apparatus may update the first value of the state information of the first AI model by using the first channel report, and the second apparatus may also update the value of the state information of the second AI model. In this way, the first apparatus and the second apparatus may have a consistent pace in updating the value of the state information of the AI model, thereby improving feedback performance of the channel report, and further improving channel information recovery performance and robustness of the recovery performance.

### Scenario #2:

The first apparatus does not send the first channel report to the second apparatus (referring to FIG. 7B).

When the first apparatus does not send the first channel report to the second apparatus, the first channel report is in a discarded state, a transmission uncompleted state, an all content transmission uncompleted state, an ignored state, a transmission skipped state, or the like.

In an example, after the first apparatus obtains the first channel report, the first apparatus cannot send the first channel report to the second apparatus due to some factors (referring to the following description). Correspondingly, the first apparatus may discard the first channel report, the first apparatus may ignore sending of the first channel report, the first apparatus may skip sending of the first channel report, or the like.

In this way, the first apparatus does not update the first value of the state information of the first AI model by using the first channel report, and the second apparatus does not update the value of the state information of the second AI model. In this way, the first apparatus and the second apparatus may have a consistent pace in updating the value of the state information of the AI model, thereby improving feedback performance of the channel report, and further improving channel information recovery performance and robustness of the recovery performance.

### Scenario #3:

The first apparatus sends, to the second apparatus, the first channel report including partial content (referring to FIG. 7C).

A complete first channel report includes three parts: A, B, and C (or the first channel report includes a sub-channel report A, a sub-channel report B, and a sub-channel report C). When the first apparatus sends a first channel report including A to the second apparatus, the first channel report is in a partial content sent state, the first channel report is in a partial content discarded state, the first channel report is in a partial content sending ignored state, or the first channel report is in a partial content sending skipped state, or the like.

In a possible example, when the first apparatus sends the first channel report including the partial content to the second apparatus, the partial content may be specified in a protocol. For example, the protocol specifies that the part A is transmitted, and the first apparatus sends the first channel report including the part A to the second apparatus.

In another possible example, when the first apparatus sends the first channel report including the partial content to the second apparatus, the partial content may be determined based on a priority of the content in the first channel report. For example, a priority of the part A is higher than a priority of the part B, and the first apparatus sends the first channel report including the part A to the second apparatus.

In embodiments of this application, the priority of the content may be determined in the following manner:
(1) A calculation priority between the content is specified in a protocol. For example, the calculation priority of the part A is higher than the calculation priority of the part B, and the first apparatus preferentially transmits the first channel report including the part A.
(2) When multi-stream transmission is performed between the second apparatus and the first apparatus, a priority of information of a first stream is higher than a priority of information of a second stream. For example, the information of the first stream is the part A, the information of the second stream is the part B, and the first apparatus preferentially transmits the first channel report including the part A.

In this way, the first apparatus may determine the partial content based on the foregoing content.

In this embodiment of this application, when the first apparatus sends the first channel report including the partial content to the second apparatus, the first channel report including the partial content may still be referred to as the first channel report. In other words, both the first apparatus and the second apparatus may determine, based on content included in the first channel report or a length and/or a format of the included content, whether the first channel report includes all content.

### Examples are as follows:

For example, the first channel report includes all content, and the first apparatus and the second apparatus determine that the first channel report is in an all content transmission state.

For example, the first report includes the partial content, and the first apparatus and the second apparatus determine that the first channel report is in a partial content transmission state.

In conclusion, the state of the first channel report is related to whether the first apparatus sends the first channel report or content included in the first channel report sent by the first apparatus to the second apparatus.

In a possible implementation, the state of the first channel report may be a transmission state of the first channel report. Examples are as follows.
◆ For example, the first apparatus sends the first channel report to the second apparatus, and the first channel report is in a transmission completed state.
◆ For example, the first apparatus does not send the first channel report to the second apparatus, and the first channel report is in a transmission uncompleted state.
◆ For example, the first apparatus sends, to the second apparatus, the first channel report including the partial content (or a part of sub-channel reports), and the first channel report is in a state in which the partial content (or the part of sub-channel reports) has been transmitted.

The transmission completed state may also be understood as an all content sent state. For example, the first apparatus sends, to the second apparatus, the first channel report including all content, and the first channel report is in the all content sent state.

The transmission uncompleted state may also be understood as a state in which all content is not sent. For example, the first apparatus does not send, to the second apparatus, the first channel report including all content, and the first channel report is in the state in which all content is not sent.

The state in which the partial content has been transmitted may also be understood as a state in which the partial content is not sent. For example, the first apparatus sends, to the second apparatus, the first channel report including the partial content, and the first channel report is in the partial content sent state.

In a possible implementation, the state of the first channel report may alternatively be a discarded state of the first channel report. Examples are as follows.
◆ For example, the first apparatus does not send the first channel report to the second apparatus, and the first channel report is in the discarded state.
◆ For example, the first apparatus sends the first channel report to the second apparatus, and the first channel report is in a non-discarded state.
◆ For example, the first apparatus sends, to the second apparatus, the first channel report including the partial content, that is, not including all content, and the first channel report is in a partial content discarded state.

That the first channel report is in the discarded state may also be understood as follows: The first apparatus discards the first channel report, the first apparatus ignores sending of the first channel report, the first apparatus skips sending of the first channel report, or the like.

That the first channel report is in the non-discarded state may also be understood as follows: The first apparatus sends the first channel report, the first apparatus does not ignore sending of the first channel report, the first apparatus does not skip sending of the first channel report, or the like.

That the first channel report is in the partial content discarded state may also be understood as follows: The first apparatus sends the first channel report, but the first channel report does not include all content, and the first apparatus discards the partial content or skips sending of the partial content (or some sub-channel reports), or the like.

In this embodiment of this application, the first apparatus may determine the state of the first channel report in the following manner.

Examples are as follows.

The first channel report is in the discarded state:

### Manner #a:

The first apparatus may determine, based on a conflict between resources, whether the first channel report is in the discarded state.

The first apparatus may determine, based on a conflict state between a resource used to transmit the first channel report and a resource used to transmit another report (for example, a hybrid automatic repeat request (hybrid automatic repeat request, HARQ) report or a scheduling request (scheduling request, SR) report), whether the first channel report is in the discarded state. In other words, the first apparatus may determine, based on the conflict state between the resource used to transmit the first channel report and the resource used to transmit the another report, whether to discard the first channel report.

### Scenario #a1:

The resource used to transmit the first channel report overlaps (overlap) with the resource used to transmit the HARQ report in time domain.

For example, the resource used to transmit the first channel report includes a first time domain resource, the resource used to transmit the HARQ report includes a second time domain resource, and the first time domain resource and the second time domain resource overlap in time domain. In other words, there is a common time domain resource between the first time domain resource and the second time domain resource.

Alternatively, the first apparatus does not support simultaneous transmission of the first channel report and the HARQ report. Because a priority of the HARQ report is higher than a priority of the first channel report, the first apparatus may discard the first channel report. In this case, the first apparatus and the second apparatus have a consistent understanding of that the first apparatus discards the first channel report. In this case, the first apparatus does not update the value of the state information of the first AI model, and an action of not updating the value of the state information of the first AI model by the first apparatus is consistent with an expectation of the second apparatus, or the second apparatus may expect that the first apparatus does not update the value of the state information of the first AI model.

The foregoing overlapping may also be understood as a conflict, a collision (collision), a crash, or the like.

### Scenario #a2:

The resource used to transmit the first channel report overlaps with the resource used to transmit the SR report in time domain.

For example, the resource used to transmit the first channel report includes a first time domain resource, the resource used to transmit the SR report includes a third time domain resource, and the first time domain resource and the third time domain resource overlap in time domain. In other words, there is a common time domain resource between the first time domain resource and the third time domain resource.

Alternatively, the first apparatus does not support simultaneous transmission of the first channel report and the SR report. Because a priority of the SR report is higher than a priority of the first channel report, the first apparatus may discard the first channel report. In this case, the first apparatus and the second apparatus have a consistent understanding of that the first apparatus discards the first channel report. In this case, the first apparatus does not update the value of the state information of the first AI model, and an action of not updating the value of the state information of the first AI model by the first apparatus is consistent with an expectation of the second apparatus, or the second apparatus may expect that the first apparatus does not update the value of the state information of the first AI model.

### Scenario #a3:

A priority of the first channel is lower than a priority of the second channel, the second channel and the first channel overlap in time domain, the first channel is used to carry the first channel report, and the second channel is used to carry uplink information.

For example, the resource used to transmit the first channel report includes the first channel, the channel used to carry the uplink information is the second channel, and the first channel and the second channel overlap in time domain. In other words, there is a common time domain resource between the first channel and the second channel.

After obtaining the first channel report, the first apparatus determines the first channel used to carry the first channel report, and determines the second channel used to carry the uplink information. When the first channel and the second channel overlap in time domain, the priority of the first channel is lower than the priority of the second channel, and the first apparatus discards the first channel report. In other words, the first apparatus ignores or skips transmission of the first channel report.

When an ultra-reliable and low-latency communication (ultra-reliable and low-latency communication, URLLC) service and an eMBB enhanced mobile broadband (enhanced mobile broadband, EMBB) service coexist, a priority of the URLLC service may be higher than a priority of the EMBB service. To distinguish between the two services, the network device configures different priorities for a physical uplink control channel (physical uplink control channel, PUCCH) /physical uplink shared channel (physical uplink shared channel, PUSCH) channel, which is represented by a priority index (priority index). When a high priority channel (for example, a smaller priority index) and a low priority channel (for example, a larger priority index) overlap in time domain, the first apparatus discards sending of the low priority channel. If the first channel report is originally to be carried on a low priority channel, the first channel report cannot be actually sent because the low priority channel is discarded. In this case, the first apparatus and the second apparatus have a consistent understanding of that the first apparatus discards the first channel report. In this case, the first apparatus does not update the value of the state information of the first AI model, and an action of not updating the value of the state information of the first AI model by the first apparatus is consistent with an expectation of the second apparatus, or the second apparatus may expect that the first apparatus does not update the value of the state information of the first AI model.

### Scenario #a4:

A channel used to carry the first channel report conflicts with a downlink symbol or a flexible symbol configured or indicated by a network device.

A PUCCH/PUSCH channel carrying the first channel report may conflict with (or may be understood as overlapping with, overlapping in time domain, or colliding in time domain) a downlink symbol or a flexible symbol configured or indicated by the network device. To avoid the conflict, the first apparatus may discard the PUCCH/PUSCH channel carrying the first channel report, and consequently, the first channel report cannot be actually sent. In this case, the first apparatus and the second apparatus have a consistent understanding of that the first apparatus discards the first channel report. In this case, the first apparatus does not update the value of the state information of the first AI model, and an action of not updating the value of the state information of the first AI model by the first apparatus is consistent with an expectation of the second apparatus, or the second apparatus may expect that the first apparatus does not update the value of the state information of the first AI model.

In an example, the PUCCH/PUSCH channel carrying the first channel report is a semi-statically configured channel, and the channel conflicts with a downlink symbol or a flexible symbol configured by the network device. For example, the channel or information corresponds to a downlink symbol or a flexible symbol (SS/PBCH block by ssb-PositionsInBurst, or belonging to a CORESET associated with a Type0-PDCCH CSS set) based on a configuration (for example, tdd-UL-DL-ConfigurationCommon or tdd-UL-DL-ConfigDedicated) of the downlink symbol or the flexible symbol.

In another example, the PUCCH/PUSCH channel carrying the first channel report is a semi-statically configured channel, and the channel conflicts with the downlink symbol or the flexible symbol indicated by the network device. For example, the network device indicates, by using downlink control information (downlink control information, DCI), that one or more symbols are downlink symbols or flexible symbols, and the symbols are used for downlink information transmission.

In conclusion, the first apparatus may determine the state of the first channel report based on whether there is a transmission requirement for a report with a higher priority. When the first apparatus determines that there is a transmission requirement for a report with a higher priority, the first apparatus may discard the first channel report, and keep the value of the state information of the first AI model unchanged. In other words, the first apparatus keeps the value of the state information of the first AI model as the first value.

In this way, the first apparatus may determine, based on one or more of the foregoing, whether the first channel report is in the discarded state. When determining that the first channel report is in the discarded state, the first apparatus does not update the value of the state information of the AI model. Because the first channel report is not received, the second apparatus does not update the value of the state information of the AI model. In this way, the first apparatus and the second apparatus have a consistent pace in updating the value of the state information of the AI model, thereby improving feedback performance of the channel report, and further improving channel information recovery performance and robustness of the recovery performance.

The first channel report is in a partial content sent state:

### Manner #b:

The first apparatus may determine, based on the resource used to generate or transmit the first channel report, whether the first channel report is in the partial content sent state.

The first apparatus may determine, based on the resource used to transmit the first channel report and the resource that is configured or indicated by the network device and that is used to transmit the first channel report, whether the first channel report is in the partial content sent state; or the first apparatus may determine, based on a quantity of resources used to generate the first channel report, whether the first channel report is in the partial content sent state.

### Scenario #b1:

A processing resource that can be used for calculation is insufficient to generate the first channel report including all content. The first channel report including all content may alternatively be replaced with an expected first channel report, a target channel report, or the like. In other words, the first channel report expected by the second apparatus is a channel report including all content, or the target channel report that the second apparatus expects to receive is a channel report including all content.

A processing resource that can be used for calculation in the first apparatus (for example, one or more of a central processing unit (central processing unit, CPU), a graphics processing unit (graphics processing unit, GPU), and a network processing unit (network processing unit, NPU)) is insufficient to generate the first channel report including all content.

For example, the processing resource that can be used for calculation is a CPU. A quantity of unoccupied CPU resources in the first apparatus is N_{CPU} - L, where N_{CPU} is a total quantity of CPU resources owned by the first apparatus, and L is a quantity of CPU resources that have been used by the first apparatus. The first channel report includes M sub-channel reports (the sub-channel report may be understood as the foregoing part A, part B, or the like). CPU resources required by each sub-channel report are respectively ${O}_{CPU}^{\left(n\right)}$, where n is an index of a sub-channel report in the first channel report, M is a quantity of sub-channel reports in the first channel report, and CPU resources required for calculating all sub-channel reports in the first channel report are ${\sum }_{n = 0}^{M - 1} {O}_{CPU}^{\left(n\right)}$. The first channel report that can be generated by the first apparatus needs to meet ${\sum }_{n = 0}^{M - 1} {O}_{CPU}^{\left(n\right)} \leq {N}_{CPU} - L$. When ${\sum }_{n = 0}^{M - 1} {O}_{CPU}^{\left(n\right)} \leq {N}_{CPU} - L$, cannot be met, a complete first channel report cannot be generated and sent. In this case, the first apparatus and the second apparatus have a consistent understanding of that the first apparatus discards the partial content in the first channel report. In this case, the first apparatus does not update the value of the state information of the first AI model, and an action of not updating the value of the state information of the first AI model by the first apparatus is consistent with an expectation of the second apparatus, or the second apparatus may expect that the first apparatus does not update the value of the state information of the first AI model. Alternatively, the first apparatus and the second apparatus have a consistent understanding of that the first apparatus discards the partial content in the first channel report. The first apparatus may update the value of the state information of the first AI model, and an action of updating the value of the state information of the first AI model by the first apparatus is consistent with an expectation of the second apparatus, or the second apparatus may expect that the first apparatus updates the value of the state information of the first AI model.

### Scenario #b2:

A time unit in which the network device configures or indicates the first channel report to be reported does not meet a time requirement for calculating the first channel report including all content.

The time unit in which the network device configures or indicates the first apparatus to report the first channel report does not meet the time requirement for calculating the first channel report including all content. Correspondingly, the first apparatus discards a part of or all bits (or partial content or some sub-channel reports) in a complete first channel report, and does not send the bits to a base station. Therefore, the complete first channel report cannot be actually sent. In this case, the first apparatus and the second apparatus have a consistent understanding of that the first apparatus discards the partial content in the first channel report. In this case, the first apparatus does not update the value of the state information of the first AI model, and an action of not updating the value of the state information of the first AI model by the first apparatus is consistent with an expectation of the second apparatus, or the second apparatus may expect that the first apparatus does not update the value of the state information of the first AI model. Alternatively, the first apparatus and the second apparatus have a consistent understanding of that the first apparatus discards the partial content in the first channel report. The first apparatus may update the value of the state information of the first AI model, and an action of updating the value of the state information of the first AI model by the first apparatus is consistent with an expectation of the second apparatus, or the second apparatus may expect that the first apparatus updates the value of the state information of the first AI model.

For example, when the network device configures or indicates the first apparatus to report the first channel report, sending of the first channel report is triggered by using the first channel report request. A time requirement of the first apparatus for calculating the first channel report corresponds to a first time unit (Z_{ref}) and a second time unit Z_{ref}' (n). The first time unit is determined by a sending moment (for example, a last symbol of a physical downlink control channel (physical downlink control channel, PDCCH) carrying the first channel report request) of the first channel report request and a first time threshold T_{proc,csi}. The second time unit is determined by a reference signal resource (for example, a last symbol of the reference signal resource) corresponding to the first channel report and a second time threshold ${T}_{proc , csi}^{′}$. If the time unit configured or indicated by the network device for the first apparatus to report the first channel report is earlier than the first time unit and/or earlier than the second time unit, the first apparatus discards a part of or all bits in the first channel report.

### Scenario #b3:

The time unit corresponding to the uplink data channel that carries the first channel report and that is configured or indicated by the network device does not meet a time requirement for calculating the first channel report including all content.

The time unit corresponding to the PUSCH channel that carries the first channel report and that is configured or indicated by the network device does not meet the calculation time of the first channel report including all content. As a result, the complete first channel report cannot be actually sent. In this case, the first apparatus and the second apparatus have a consistent understanding of that the first apparatus discards the partial content in the first channel report. In this case, the first apparatus does not update the value of the state information of the first AI model, and an action of not updating the value of the state information of the first AI model by the first apparatus is consistent with an expectation of the second apparatus, or the second apparatus may expect that the first apparatus does not update the value of the state information of the first AI model. Alternatively, the first apparatus and the second apparatus have a consistent understanding of that the first apparatus discards the partial content in the first channel report. The first apparatus may update the value of the state information of the first AI model, and an action of updating the value of the state information of the first AI model by the first apparatus is consistent with an expectation of the second apparatus, or the second apparatus may expect that the first apparatus updates the value of the state information of the first AI model.

### Scenario #b4:

The transmission resource configured or indicated by the network device to carry the first channel report is insufficient to carry the first channel report including all content.

The network device configures or indicates that a transmission resource used to carry uplink control information (uplink control information, UCI) (used to carry the first channel report) is insufficient to carry all information of the first channel report, and the first apparatus discards the first channel report or a part of information with a low priority in the first channel report.

In an example, because the resource for carrying the UCI is insufficient to carry any information in the first channel report, the first apparatus discards the first channel report.

In another example, because the resource for carrying the UCI is insufficient to carry all information in the first channel report, the first apparatus discards some information with a low priority in the first channel report, and still retains some information with a high priority for sending. Therefore, the complete first channel report cannot be actually sent. In this case, the first apparatus and the second apparatus have a consistent understanding of that the first apparatus discards the partial content in the first channel report. In this case, the first apparatus does not update the value of the state information of the first AI model, and an action of not updating the value of the state information of the first AI model by the first apparatus is consistent with an expectation of the second apparatus, or the second apparatus may expect that the first apparatus does not update the value of the state information of the first AI model. Alternatively, the first apparatus and the second apparatus have a consistent understanding of that the first apparatus discards the partial content in the first channel report. The first apparatus may update the value of the state information of the first AI model, and an action of updating the value of the state information of the first AI model by the first apparatus is consistent with an expectation of the second apparatus, or the second apparatus may expect that the first apparatus updates the value of the state information of the first AI model.

In conclusion, the first apparatus may determine the state of the first channel report based on the transmission resource or the processing resource of the first channel report. For example, when the first apparatus determines that there are insufficient processing resources or transmission resources, the first apparatus sends, to the second apparatus, the first channel report including the partial content.

In this way, the first apparatus may determine, based on one or more of the foregoing, whether the first channel report is in the partial content sent state. When determining that the first channel report is in the partial content sent state, the first apparatus may determine whether to update the value of the state information of the AI model. Correspondingly, this can avoid that the first apparatus updates the value of the state information of the first AI model before determining whether the first channel report is in the all content sent state, so that the first apparatus and the second apparatus can support a consistent pace in updating the value of the state information of the AI model, thereby improving feedback performance of the channel report, and further improving channel information recovery performance and robustness of the recovery performance.

S802: The first apparatus determines the value of state information of the first AI model.

For example, the value of the state information of the first AI model is related to the state of the first channel report.

For example, the state of the first channel report is the all content sent state, and the first apparatus updates the value of the state information of the first AI model. For example, the first apparatus updates the first value of the state information of the first AI model by using the first channel report, to obtain a new value (referring to FIG. 7A).

For example, the state of the first channel report is the state in which all content is not sent, and the first apparatus maintains the value of the state information of the first AI model unchanged (referring to FIG. 7B).

For example, the state of the first channel report is the partial content sent state, and the first apparatus does not update the value of the state information of the first AI model. For example, the first apparatus maintains the value of the state information of the first AI model as the first value.

For example, the state of the first channel report is the partial sent state, and the first apparatus updates the value of the state information of the first AI model. For example, the first apparatus updates the first value of the state information of the first AI model by using the channel measurement result of the first reference signal, to obtain a new value (referring to FIG. 7C).

In this way, the first apparatus may determine a corresponding behavior based on the state of the first channel report. For example, the first apparatus determines, based on the state of the first channel report, whether to update the value of the state information of the first AI model or maintain the value of the state information of the first AI model. In this way, the first apparatus and the second apparatus have a consistent pace in updating the value of the state information of the AI model, thereby improving feedback performance of the channel report, and further improving channel information recovery performance and robustness of the recovery performance.

In a possible implementation, the state of the first channel report is the partially sent state, and the value of the state information of the first AI model is related to an offset between a sending time unit of a second channel report and a generation time unit of a third channel report.

When the first apparatus sends the first channel report including the partial content to the second apparatus, the first apparatus may determine, based on the offset between the sending time unit of the second channel report and the generation time unit of the third channel report, whether to update the value of the state information of the first AI model. When it is ensured that the first apparatus and the second apparatus have a consistent pace for the value of the state information of the AI model, the first apparatus may use real-time valid channel information, thereby ensuring performance of channel report feedback.

The third channel report is the first channel report sent after the first channel report, or the third channel report is the first channel report generated after the first channel report.

For example, the first apparatus may determine, based on the offset between the sending time unit of the second channel report and the generation time unit of the third channel report, whether to update the value of the state information of the first AI model.

For example, if the offset between the sending time unit of the second channel report and the generation time unit of the third channel report is greater than a threshold #1 (for example, the threshold #1 is 50 ms, or the threshold #1 is a measurement period of 10 reference signals), the first apparatus updates the value of the state information of the first AI model. For example, the first apparatus updates the value of the state information of the first AI model by using the channel measurement result of the first reference signal, to obtain a new value.

For example, if the offset between the sending time unit of the second channel report and the generation time unit of the third channel report is less than the threshold #1, the first apparatus maintains the value of the state information of the first AI model unchanged. For example, the value of the state information of the first AI model is the first value.

When the offset between the sending time unit of the second channel report and the generation time unit of the third channel report is equal to the threshold #1, the first apparatus may update the value of the state information of the first AI model, or may maintain the value of the state information of the first AI model unchanged. This is not limited herein.

The threshold #1 is indicated or configured by the network device, or the threshold #1 is predefined.

That the threshold #1 is predefined may include: The threshold #1 is predefined in a protocol, the threshold #1 is pre-stored, the threshold #1 is pre-burnt, or the like.

It should be noted that the threshold #1 may be understood as a time length. When the offset between the sending time unit of the second channel report and the generation time unit of the third channel report is greater than the threshold #1, the first apparatus may update the value of the state information of the first AI model by using the channel measurement result of the first reference signal corresponding to the first channel report, to avoid excessive loss of feedback performance of the channel report. When the offset between the sending time unit of the second channel report and the generation time unit of the third channel report is less than the threshold #1, the first apparatus may determine, based on the state of the third channel report, whether to update the value of the state information of the first AI model. This can support updating the value of the state information of the first AI model by using a channel measurement result corresponding to a more complete channel report, thereby improving feedback performance of the channel report.

In this way, the first apparatus may determine, based on a relationship between the offset and the threshold, whether to update the value of the state information of the first AI model. In a possible implementation, the first apparatus may determine the value of the state information of the first AI model based on whether the offset between the sending time unit of the second channel report and the generation time unit of the third channel report meets a first condition.

An example of the first condition may be greater than or equal to the foregoing threshold #1, or may be within a first value range. For example, the first value range may be 50 ms to 100 ms. Alternatively, for example, the first value range may be: a measurement period of five reference signals to a measurement period of 10 reference signals.

For example, if the offset between the sending time unit of the second channel report and the generation time unit of the third channel report meets the first condition, the first apparatus updates the value of the state information of the first AI model.

For another example, if the offset between the sending time unit of the second channel report and the generation time unit of the third channel report does not meet the first condition, the first apparatus maintains the value of the state information of the first AI model unchanged.

Alternatively, an example of the first condition may be less than the foregoing threshold #1, or may be not belonging to the first value range (for example, belonging to a second value range, where the second value range does not overlap with the first value range).

If the offset between the sending time unit of the second channel report and the generation time unit of the third channel report does not meet the first condition, the first apparatus updates the value of the state information of the first AI model.

Alternatively, if the offset between the sending time unit of the second channel report and the generation time unit of the third channel report meets the first condition, the first apparatus maintains the value of the state information of the first AI model unchanged.

In conclusion, the first apparatus may determine, based on whether the offset between the sending time unit of the second channel report and the generation time unit of the third channel report meets the first condition, whether to update the value of the state information of the first AI model. For example, when the first apparatus determines to update the value of the state information of the first AI model, the first apparatus updates the value of the state information of the first AI model by using the channel measurement result of the first reference signal corresponding to the first channel report, to avoid excessive loss of feedback performance of the channel report. When the first apparatus determines not to update the value of the state information of the first AI model, the first apparatus may determine, based on a state of the third channel report, whether to update the value of the state information of the first AI model. This can support updating the value of the state information of the first AI model by using a channel measurement result corresponding to a more complete channel report, thereby improving feedback performance of the channel report.

It should be noted that the generation time unit of the third channel report may alternatively be a processing time unit of the third channel report, a start generation time unit of the third channel report, or the like. This is not limited herein.

In this embodiment of this application, when the first channel report is in the all content sent state, for the first apparatus, the first channel report may be an expected channel report (expected report), and for the second apparatus, the first channel report is a received channel report (received report). When the first channel report is in the partial sent state, for the first apparatus, the first channel report may be a transmitted channel report (transmitted report), and for the second apparatus, the first channel report is a received channel report (received report). When the first channel report is in the discarded state, for the first apparatus, the first channel report may be further understood as a discarded channel report (dropped report).

In the foregoing solution, the first apparatus may determine, based on the state of the first channel report, whether to update the value of the state information of the first AI model. For example, when the state of the first channel report indicates that the first channel report is in a transmission uncompleted state, the first apparatus determines not to update the value of the state information of the first AI model, that is, the first apparatus keeps the value of the state information of the first AI model unchanged. When the second apparatus does not receive the first channel report, the second apparatus does not update the value of the state information of the second AI model, and the first apparatus does not update the value of the state information of the first AI model. In this way, the first apparatus and the second apparatus have a consistent pace in updating the value of the state information of the AI model. This can improve feedback performance of the channel report, and further improving channel information recovery performance and robustness of the recovery performance.

FIG. 8 is described by using an example in which the first apparatus determines the value of the state information of the first AI model based on the state of the first channel report. The following describes content in which the second apparatus determines the value of the state information of the second AI model based on the state of the first channel report.

FIG. 9 is a schematic interaction flowchart of another communication method according to an embodiment of this application. As shown in FIG. 9, the method includes the following steps.

Optionally, S901a: A second apparatus sends a first reference signal to a first apparatus.

Correspondingly, the first apparatus receives the first reference signal.

For descriptions of S901a, refer to the foregoing descriptions of S801a.

Optionally, S901b: The first apparatus obtains a first channel report.

For descriptions of S901b, refer to the foregoing descriptions of S801b.

Optionally, S901c: The first apparatus sends a first channel report to the second apparatus.

Correspondingly, the second apparatus receives the first channel report.

S901: The second apparatus determines a state of the first channel report.

When the first apparatus sends the first channel report to the second apparatus, the second apparatus may determine the state of the first channel report based on content included in the first channel report.

For example, the second apparatus determines that the first channel report includes only partial content, and the second apparatus determines that the first channel report is in a partial content sent state or the first channel report is in a partial content received state.

For example, the second apparatus determines that the first channel report includes all content, and the second apparatus determines that the first channel report is in an all content sent state or the first channel report is in an all content received state.

For descriptions of the state of the first channel report, refer to the descriptions in FIG. 8. Details are not described again.

S902: The second apparatus determines a value of state information of a second AI model.

For example, the value of the state information of the second AI model is related to the state of the first channel report.

For example, the state of the first channel report is an all content sent state. The second apparatus updates the value of the state information of the second AI model. For example, the second apparatus updates the first value of the state information of the second AI model (referring to d₂ in FIG. 7A) by using the first channel report, to obtain a new value.

The first value of the state information of the second AI model is determined by updating a second value of the state information of the second AI model (referring to d₁ in FIG. 7A) based on the second channel report, and an update of the first value is related to the first channel report.

For example, the state of the first channel report is a partial content sent state. The second apparatus does not update the value of the state information of the second AI model. For example, the second apparatus maintains the value of the state information of the second AI model as the first value.

For example, the state of the first channel report is a partial sent state. The first apparatus updates the value of the state information of the second AI model. For example, the second apparatus updates the first value of the state information of the second AI model by using the first channel report including the partial content, to obtain a new value.

In a possible implementation, the state of the first channel report is the partial sent state, and the value of the state information of the second AI model is related to an offset between a receiving time unit of the second channel report and a receiving time unit of the third channel report.

The third channel report is a 1^{st} channel report received after the first channel report (referring to c₄ in FIG. 7B).

For example, the second apparatus determines, based on an offset between the receiving time unit of the second channel report and the receiving time unit of the third channel report, whether to update the value of the state information of the second AI model.

For example, if the offset between the receiving time unit of the second channel report and the receiving time unit of the third channel report is greater than a threshold #2, the second apparatus updates the value of the state information of the second AI model. For example, the second apparatus updates the value of the state information of the second AI model by using the first channel report, to obtain a new value.

For example, if the offset between the receiving time unit of the second channel report and the receiving time unit of the third channel report is less than the threshold #2, the second apparatus maintains the value of the state information of the second AI model unchanged. For example, the value of the state information of the second AI model is the first value.

When the offset between the receiving time unit of the second channel report and the receiving time unit of the third channel report is equal to the threshold #2, the second apparatus may update the value of the state information of the second AI model, or may maintain the value of the state information of the second AI model unchanged. This is not limited herein.

For descriptions of the threshold #2, refer to the descriptions of the threshold #1. Details are not described again. For example, the threshold #2 is equal to the threshold #1.

The threshold #2 is indicated or configured by the network device, or the threshold #2 is predefined.

That the threshold #2 is predefined may include: The threshold #2 is predefined in a protocol, the threshold #2 is pre-stored, the threshold #2 is pre-burnt, or the like.

It should be noted that the threshold #2 may be understood as a time length. When the offset between the receiving time unit of the second channel report and the receiving time unit of the third channel report is greater than the threshold #2, the second apparatus may update the value of the state information of the second AI model by using the first channel report including the partial content, to avoid excessive loss of feedback performance of the channel report. When the offset between the receiving time unit of the second channel report and the receiving time unit of the third channel report is less than the threshold #2, the second apparatus does not update the value of the state information of the second AI model, and may determine, based on the state of the third channel report, whether to update the value of the state information of the second AI model. This can support updating the value of the state information of the second AI model by using a more complete channel report, thereby improving feedback performance of the channel report.

In a possible implementation, the second apparatus determines the value of the state information of the second AI model based on whether the offset between the receiving time unit of the second channel report and the receiving time unit of the third channel report meets the second condition.

For example, when the offset between the receiving time unit of the second channel report and the receiving time unit of the third channel report meets the second condition, the second apparatus updates the value of the state information of the second AI model.

For another example, when the offset between the receiving time unit of the second channel report and the receiving time unit of the third channel report does not meet the second condition, the second apparatus maintains the value of the state information of the second AI model unchanged.

For a description of the second condition, refer to the description of the first condition. Details are not described again. For example, the second condition is the same as the first condition.

In conclusion, the second apparatus may determine, based on whether the offset between the receiving time unit of the second channel report and the receiving time unit of the third channel report meets the second condition, whether to update the value of the state information of the second AI model. For example, when the second apparatus determines to update the value of the state information of the second AI model, the second apparatus updates the value of the state information of the second AI model by using the first channel report including the partial content, to avoid excessive loss of feedback performance of the channel report. When the second apparatus determines not to update the value of the state information of the second AI model, the second apparatus may determine, based on the state of the third channel report, whether to update the value of the state information of the second AI model. This can support updating the value of the state information of the second AI model by using a more complete channel report, thereby improving feedback performance of the channel report.

In the solution shown in FIG. 9, when the first apparatus determines the value of the state information of the first AI model based on the state of the first channel report, the second apparatus also determines the value of the state information of the second AI model based on the state of the first channel report. This can ensure that the first apparatus and the second apparatus have a consistent pace in updating the value of the state information of the AI model, thereby improving feedback performance of the channel report, and further improving channel information recovery performance and robustness of the recovery performance.

Content shown in FIG. 8 and FIG. 9 is described by using an example in which the first apparatus is the terminal device and the second apparatus is the network device. The following describes, with reference to FIG. 10, a scenario in which the first apparatus and the second apparatus are respectively AI entities serving a terminal device and a network device.

FIG. 10 is a schematic flowchart of still another communication method according to an embodiment of this application. As shown in FIG. 10, the first apparatus is an OTT, and the second apparatus is a near-real-time RIC. The method includes the following steps.

Optionally, S1001a: A network device sends a first reference signal to a terminal device.

Correspondingly, the terminal device receives the first reference signal.

For descriptions of S1001a, refer to the descriptions of S801a. Details are not described again.

Optionally, S1001b: The terminal device obtains a channel measurement result of the first reference signal.

Optionally, S1001c: The terminal device sends the channel measurement result of the first reference signal to the OTT.

Correspondingly, the OTT receives the channel measurement result of the first reference signal.

S1001: The OTT obtains a first channel report.

For descriptions of S1001, refer to the descriptions of S801b. Details are not described again.

S1002: The OTT sends the first channel report to the terminal device.

Correspondingly, the terminal device receives the first channel report.

S1003: The terminal device sends the first channel report to the network device.

Correspondingly, the network device receives the first channel report.

S1004: The network device sends the first channel report to the near-real-time RIC.

Correspondingly, the near-real-time RIC receives the first channel report.

S1005: The OTT obtains a state of the first channel report.

For descriptions of S1005, refer to the descriptions of S801. Details are not described again.

S1006: The OTT determines a value of state information of a first AI model.

For descriptions of S1006, refer to the descriptions of S802. Details are not described again.

S1007: The near-real-time RIC obtains the state of the first channel report.

For descriptions of S1007, refer to the descriptions of S901. Details are not described again.

S1008: The near-real-time RIC determines a value of state information of a second AI model.

For descriptions of S1008, refer to the descriptions of S902. Details are not described again.

In the method shown in FIG. 10, the state of the first channel report is a partial content sent state.

According to the method shown in FIG. 10, a pace in updating the value of the state information of the AI model between the OTT and the near-real-time RIC may be consistent, so that feedback performance of the channel report can be improved, and channel information recovery performance and robustness of the recovery performance can be improved.

With reference to the methods shown in FIG. 8 to FIG. 10, the first apparatus and the second apparatus may determine, based on the state of the first channel report, whether to update the value of the state information of the AI model. This can avoid a scenario in which the first apparatus updates the value of the state information of the AI model but the second apparatus does not update the value of the state information of the AI model, thereby improving feedback performance of the channel report, and further improving channel information recovery performance and robustness of the recovery performance.

In addition, when the first apparatus is the terminal device, and the second apparatus is the near-real-time RIC, that the pace in updating the value of the state information of the AI model between the first apparatus and the second apparatus is consistent may be implemented according to the foregoing method. Details are not described again. Alternatively, when the first apparatus is the OTT, and the second apparatus is the network device, that the pace in updating the value of the state information of the AI model between the first apparatus and the second apparatus is consistent may be implemented according to the foregoing method. Details are not described again.

Finally, apparatus embodiments in embodiments of this application are described.

To implement functions in the method provided in this application, the first apparatus and the second apparatus may each include a hardware structure and/or a software module, to implement the foregoing functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

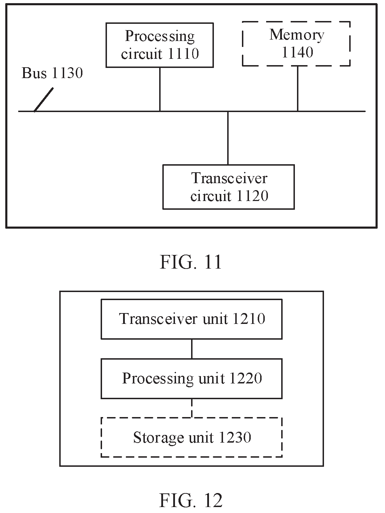

FIG. 11 is a block diagram of a communication apparatus according to an embodiment of this application. The communication apparatus includes a processing circuit 1110 and a transceiver circuit 1120. The processing circuit 1110 and the transceiver circuit 1120 may be connected or coupled to each other, for example, connected to each other through a bus 1130. The communication apparatus may be a first apparatus or a second apparatus.

Optionally, the communication apparatus may further include a memory 1140. The memory 1140 includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 1140 is configured to store related instructions and data.

The processing circuit 1110 may be all or some processing circuits in one or more processors, or may be one or more processors. The processor may be a central processing unit (central processing unit, CPU). When the processing circuit 1110 is one CPU, the CPU may be a single-core CPU or a multi-core CPU.

The processing circuit 1110 may be a signal processor, a chip, or another integrated circuit that can implement the method in this application, or may be a part of a circuit that is used for a processing function in the foregoing processor, chip, or integrated circuit.

The transceiver circuit 1120 may alternatively be a transceiver or an input/output interface. The input/output interface is configured to input or output a signal or data, and may also be referred to as an input/output circuit.

When the communication apparatus is a first apparatus, the processing circuit 1110 is configured to perform the following operations: obtaining a state of a first channel report; determining a value of state information of a first AI model; and the like.

When the communication apparatus is a second apparatus, the processing circuit 1110 is configured to perform the following operations: obtaining the state of the first channel report; determining a value of state information of a second AI model; and the like.

The foregoing content is merely used as an example for description. When the communication apparatus is the first apparatus or the second apparatus, the communication apparatus is responsible for performing the method or steps related to the first apparatus or the second apparatus in the foregoing method embodiments.

When the communication apparatus is the first apparatus or the second apparatus, the transceiver circuit 1120 may be a transceiver.

When the communication apparatus is a chip used in the first apparatus or the second apparatus, the transceiver circuit 1120 may be an input/output circuit.

For specific content, refer to the content shown in the method embodiments.

For implementation of the operations in FIG. 11, refer to corresponding descriptions of the method embodiments shown in FIG. 8 to FIG. 10.

FIG. 12 is another block diagram of a communication apparatus according to an embodiment of this application. The communication apparatus may be a first apparatus or a second apparatus, and is configured to implement the method in the foregoing embodiments.

The communication apparatus includes a transceiver unit 1210 and a processing unit 1220. The transceiver unit 1210 may include a sending unit and a receiving unit. The sending unit is configured to perform a sending action of the communication apparatus. The receiving unit is configured to perform a receiving action of the communication apparatus. For ease of description, in this embodiment of this application, the sending unit and the receiving unit are combined into the transceiver unit. Unified descriptions are provided herein, and details are not described below again.

When the communication apparatus is the first apparatus, for example, the transceiver unit 1210 is configured to receive a first reference signal and the like, the processing unit 1220 is configured to perform content of steps such as processing and control related to the first apparatus. For example, the processing unit 1220 is configured to obtain a state of a first channel report, and the like.

When the communication apparatus is the second apparatus, for example, the transceiver unit 1210 is configured to send the first reference signal, and the like, the processing unit 1220 is configured to perform content of steps such as processing and control related to the second apparatus. For example, the processing unit 1220 is configured to obtain the state of the first channel report, and the like.

When the communication apparatus is the first apparatus or the second apparatus, the communication apparatus is responsible for performing one or more of the methods or steps related to the first apparatus or the second apparatus in the foregoing method embodiments.

Optionally, the communication apparatus further includes a storage unit 1230, and the storage unit 1230 is configured to store a program or code used to perform the foregoing methods.

The transceiver unit in FIG. 12 may correspond to the transceiver circuit in FIG. 11, and the processing unit in FIG. 12 may correspond to the processing circuit in FIG. 11.

The apparatus embodiments shown in FIG. 11 and FIG. 12 are used for implementing the content described in FIG. 8 to FIG. 10. For specific execution steps and methods of the apparatuses shown in FIG. 11 and FIG. 12, refer to the content described in the foregoing method embodiments.

This application further provides a chip, including a processor, configured to invoke instructions from a memory and run the instructions stored in the memory, to cause a communication device on which the chip is installed to perform the method in the foregoing examples. The memory may be integrated into the chip, or may be located outside the chip.

This application further provides another chip, including: an input interface, an output interface, and a processing circuit, where the input interface, the output interface, and the processor are connected through an internal connection path, the processing circuit is configured to execute code in a memory, and when the code is executed, the processing circuit is configured to perform the methods in the foregoing examples. Optionally, the chip further includes the memory. The memory is configured to store a computer program or the code. The input interface and the output interface may be independent of each other, or may be integrated into an input/output interface.

The processing circuit may be all or a part of processing circuits in one or more processors, or may be one or more processors.

This application further provides a processor, configured to be coupled to a memory, and configured to perform a method and a function that are related to the network device or the terminal device in any one of the foregoing embodiments.

Another embodiment of this application provides a computer program product including instructions. When the computer program product runs on a computer, the method in the foregoing embodiments is implemented.

This application further provides a computer program. When the computer program is run on a computer, the method in the foregoing embodiments is implemented.

Another embodiment of this application provides a computer-readable storage medium. The computer-readable storage medium stores a computer program. When the computer program is executed by a computer, the method in the foregoing embodiments is implemented.

It should be understood that, the processor in embodiments of this application may be a central processing unit (central processing unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA), another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. By way of example, and not limitation, random access memories (random access memory, RAM) in many forms may be used, for example, a static random access memory (static RAM, SRAM), a dynamic random access memory (dynamic random access memory, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

All or some of the foregoing embodiments may be implemented using software, hardware, firmware, or any combination thereof. When software is used to implement embodiments, the foregoing embodiments may be implemented completely or partially in a form of a computer program product. The computer program product includes one or more computer instructions or computer programs. When the computer instructions or computer programs are loaded and executed on a computer, all or a part of the procedures or functions according to embodiments of this application are generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired or wireless (for example, infrared, radio, or microwave) manner. The computer-readable storage medium may be any usable medium accessible by a computer, or a data storage device, such as a server or a data center, integrating one or more usable media. The usable medium may be a magnetic medium (for example, a floppy disk, a hard disk drive, a magnetic tape), an optical medium (for example, a DVD), or a semiconductor medium. The semiconductor medium may be a solid-state drive.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application. It may be clearly understood by a person skilled in the art that, for the purpose of convenient and brief description, for a detailed working process of the foregoing system, apparatus, and unit, refer to a corresponding process in the foregoing method embodiments. Details are not described herein again. In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments. In addition, functional units in embodiments of this application may be integrated into one processing unit, or each unit may exist physically alone, or two or more units may be integrated into one unit. When the functions are implemented in a form of software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The foregoing storage medium includes: any medium that can store program code, such as a USB flash disk, a removable hard disk, a read-only memory, a random access memory, a magnetic disk, or an optical disc.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

## Claims

1. A communication method, comprising:
obtaining a state of a first channel report; and
determining a value of state information of a first artificial intelligence AI model, wherein the value of the state information of the first AI model is related to the state of the first channel report.

2. The method according to claim 1, wherein the first channel report is determined based on a first value of the state information of the first AI model.

3. The method according to claim 2, wherein that the value of the state information of the first AI model is related to the state of the first channel report comprises:
the state of the first channel report is a discarded state, and the value of the state information of the first AI model remains unchanged;
the state of the first channel report is a partial content sent state, and the value of the state information of the first AI model remains unchanged; or
the state of the first channel report is an all content sent state, and the value of the state information of the first AI model is updated.

4. The method according to claim 3, wherein that the state of the first channel report is the discarded state is determined based on at least one of the following:
a resource used to transmit the first channel report overlaps, in time domain, with a resource used to transmit a hybrid automatic repeat request report;
a resource used to transmit the first channel report overlaps, in time domain, with a resource used to transmit a scheduling request report;
a priority of a first channel is lower than a priority of a second channel, the second channel overlaps with the first channel in time domain, the first channel is used to carry the first channel report, and the second channel is used to carry uplink information; or
a channel used to carry the first channel report conflicts with a downlink symbol or a flexible symbol configured or indicated by a network device.

5. The method according to claim 2, wherein that the value of the state information of the first AI model is related to the state of the first channel report comprises:
the state of the first channel report is a partial content sent state, and the value of the state information of the first AI model is related to an offset between a sending time unit of a second channel report and a generation time unit of a third channel report;
the second channel report is determined based on a second value of the state information of the first AI model, and the first value is determined by updating the second value based on the second channel report; and
the third channel report is a 1^{st} channel report sent after the first channel report.

6. The method according to claim 5, wherein that the value of the state information of the first AI model is related to the offset between the sending time unit of the second channel report and the generation time unit of the third channel report comprises:
when the offset is greater than a threshold, the value of the state information of the first AI model is updated; or
when the offset is less than the threshold, the value of the state information of the first AI model remains unchanged.

7. The method according to claim 5 or 6, wherein
the threshold is indicated or configured by a network device, or the threshold is predefined.

8. The method according to any one of claims 3 to 7, wherein that the state of the first channel report is the partial content sent state is determined based on at least one of the following:
a processing resource that may be used for calculation is insufficient to generate an expected first channel report;
a time unit that is configured or indicated by the network device for reporting the first channel report does not meet a time requirement for calculating the expected first channel report;
a time unit that is configured or indicated by the network device and that corresponds to an uplink data channel carrying the first channel report does not meet the time requirement for calculating the expected first channel report; or
a transmission resource that is configured or indicated by the network device to carry the first channel report is insufficient to carry the expected first channel report.

9. The method according to any one of claims 2 to 8, wherein
the first value is determined based on a channel measurement result of a historical reference signal;
a sending time unit of the historical reference signal is earlier than a sending time unit of a first reference signal; and
the first channel report corresponds to the first reference signal.

10. A communication method, comprising:
obtaining a state of a first channel report; and
determining a value of state information of a second artificial intelligence AI model, wherein the value of the state information of the second AI model is related to the state of the first channel report.

11. The method according to claim 10, wherein that the value of the state information of the second AI model is related to the state of the first channel report comprises:
the state of the first channel report is a partial content sent state, and the value of the state information of the second AI model remains unchanged; or
the state of the first channel report is an all content sent state, and the value of the state information of the second AI model is updated.

12. The method according to claim 10, wherein that the value of the state information of the second AI model is related to the state of the first channel report comprises:
the state of the first channel report is a partial content sent state, and the value of the state information of the second AI model is related to an offset between a receiving time unit of a second channel report and a receiving time unit of a third channel report;
a first value of the state information of the second AI model is determined by updating a second value of the state information of the second AI model based on the second channel report, and an update of the first value is related to the first channel report; and
the third channel report is a 1^{st} channel report received after the first channel report.

13. The method according to claim 12, wherein that the value of the state information of the second AI model is related to the offset between the receiving time unit of the second channel report and the receiving time unit of the third channel report comprises:
when the offset is greater than a threshold, the value of the state information of the second AI model is updated; or
when the offset is less than the threshold, the value of the state information of the second AI model remains unchanged.

14. The method according to claim 12 or 13, wherein
the threshold is indicated or configured by a network device, or the threshold is predefined.

15. The method according to any one of claims 11 to 14, wherein that the state of the first channel report is the partial content sent state is determined based on at least one of the following:
a processing resource that may be used for calculation on a terminal device side is insufficient to generate an expected first channel report;
a time unit that is configured or indicated by the network device for reporting the first channel report does not meet a time requirement for calculating the expected first channel report;
a time unit that is configured or indicated by the network device and that corresponds to an uplink data channel carrying the first channel report does not meet the time requirement for calculating the expected first channel report; or
a transmission resource that is configured or indicated by the network device to carry the first channel report is insufficient to carry the expected first channel report.

16. A communication apparatus, comprising a processing circuit, wherein the processing circuit is configured to:
by executing a computer program or instructions, or through a hardware circuit,
enable the communication apparatus to perform the method according to any one of claims 1 to 9, or
enable the communication apparatus to perform the method according to any one of claims 10 to 15.

17. A communication apparatus, comprising a module configured to perform the method according to any one of claims 1 to 15.

18. A communication apparatus, comprising a processor, wherein the processor is configured to, by executing a computer program or instructions or through a logic circuit,
enable the communication apparatus to perform the method according to any one of claims 1 to 9; or
enable the communication apparatus to perform the method according to any one of claims 10 to 15.

19. A communication apparatus, comprising a logic circuit and an input/output interface, wherein the input/output interface is configured to input and/or output a signal; and
the logic circuit is configured to perform the method according to any one of claims 1 to 9; or
the logic circuit is configured to perform the method according to any one of claims 10 to 15.

20. A computer-readable storage medium, wherein the computer-readable storage medium stores a computer program or instructions; and when the computer program or the instructions are run on a computer,
the method according to any one of claims 1 to 9 is performed; or
the method according to any one of claims 10 to 15 is performed.

21. A computer program product, comprising instructions, wherein when the instructions are run on a computer,
the method according to any one of claims 1 to 9 is performed; or
the method according to any one of claims 10 to 15 is performed.

22. A chip, comprising one or more processors, wherein the processor is configured to execute a computer program or instructions in a memory, to enable the chip to implement the method according to any one of claims 1 to 9; or
enable the chip to implement the method according to any one of claims 10 to 15.

23. A chip system, comprising one or more processors, wherein the processor is configured to execute a computer program or instructions in a memory, to enable the chip system to implement the method according to any one of claims 1 to 9; or
enable the chip system to implement the method according to any one of claims 10 to 15.
